# EUROPEAN PATENT APPLICATION

(11) **EP 3 750 950 A1**
(43) Date of publication of application: **16.12.2020**
(21) Application number: 19179749.7
(22) Date of filing: 12.06.2019
(51) Int. Cl.: C08J 9/00

(54) **CHEMICAL FOAMING OF PVC WITH SURFACE-REACTED CALCIUM CARBONATE (MCC) AND/OR HYDROMAGNESITE**

(71) Applicant: Omya International AG, 4665 Oftringen (CH)
(72) Inventor: SPEHN, Jürgen, 5745 Safenwil (CH); IPPOLITO, Fabio, 4803 Vordemwald (CH); BARADEL, Franck, 4800 Zofingen (CH); UNGER, Marcus, 91601 Dombühl (DE)
(74) Representative: Glas, Holger

(57) **Abstract**

The present invention relates to a PVC resin composition for preparing foamed polymer products, to a foamed polymer product prepared from the composition, to a method for preparing a foamed polymer product, to an article comprising the foamed polymer product as well as to the use of a surface-reacted calcium carbonate, hydromagnesite and mixtures thereof for reducing the density of the obtained foamed PVC product.

## Description

The present invention relates to a PVC resin composition for preparing foamed polymer products, to a foamed polymer product prepared from the composition, to a method for preparing a foamed polymer product, to an article comprising the foamed polymer product as well as to the use of a surface-reacted calcium carbonate or hydromagnesite and mixtures thereof for reducing the density of the obtained foamed PVC product.

Foamed PVC polymer products are used for a great variety of industrial applications such as for insulation of electrical wires, for pipes in various municipal and industrial applications, for housings of portable electronics, for signs or tiles, window and roller-blind profiles, wood substitutes and sheets etc. In particular, PVC polymer foams are in a growing demand as foams show a reduced density compared to other PVC materials which also results in a lower part weight. However, in order to reduce the costs of such foam formulations mineral filler particles are used as an integral part of PVC polymer foams.

In the art, several attempts have been made to incorporate mineral fillers in PVC polymer foam formulations. For example, WO 2010/049530 A2 relates to profiles made of foamed polyvinyl chloride polymer comprising at least 40, preferably at least 60 weight parts of naturally occurring mineral filler for every 100 weight parts of PVC, wherein the naturally occurring mineral filler refers to wollastonite, vermiculite, talc, mica and/or combinations thereof. US 4,402,893 describes a method for the preparation of a cellular foamed body of a vinyl chloride-based resin having a very fine and uniform cellular structure with high productivity in a continuous process, wherein a vinyl chloride-based resin is admixed with a nucleating agent. Materials suitable as the nucleating agent are described as being calcium carbonate, talc, barium sulfate, fumed silica, titanium dioxide, clay, aluminum oxide, bentonite, diatomaceous earth. EP 2 612 881 refers to a resin composition for preparing foamed rigid polymer products, wherein said composition comprises at least one polymer resin, a surface-treated calcium carbonate having a weight median particle diameter *d*₅₀ of between 0.1 µm and 1 µm, measured according to the sedimentation method, in an amount of at least 10 parts per hundred parts of the at least one polymer resin (phr), and a blowing agent in an amount of less than 1 phr.

Unfortunately, an increasing amount of such mineral filler particles incorporated in the PVC polymer foam formulation often causes the density and part weight of the foamed polymer product to increase.

A further approach considers the optimization of the blowing agent used for promoting foam formation in order to improve the evolution of gas during processing. This approach offers the advantage that the amount of blowing agent can be reduced while the amount of mineral filler particles can be increased at the same time so that the overall desired density and part weight is maintained. In this regard, several attempts have been made in the art to optimize the properties of blowing agents.

For example, CA 2 737 471 A1 describes that the density of foamed articles made by the thermal decomposition of a blowing agent in a vinyl chloride polymer is reduced by the use of a tin based blowing agent activator(s). US 2006/0264523 A1 relates to the foams of polyvinyl chloride nanocomposites comprising of polyvinyl chloride, layered silicates, and foaming agents. It is further described that the layered silicates dispersed onto the vinyl chloride resins improve the foaming efficiency of the foaming agent. WO 2005/090456 A1 describes a method for the production of foamed halogen-containing organic plastics, wherein a blowing agent mixture comprising chemical blowing agents, polyols and salts of perchloric acid in form of a physical mixture is added to the plastic-containing pre-mixture before the extrusion and after homogeneous dispersion the resulting mixture is manipulated accordingly. US 5,821,274 relates to the use of stabilizers for foamed PVC resins as activators for the blowing agents used in the preparation of foamed polyvinyl chloride resins.

However, to comply with the requirement of maintaining a density and part weight as low as possible, and to increase the amount of incorporated mineral filler particles in PVC polymer foams at the same time, the properties of the mineral filler and/or blowing agent still need to be improved.

Therefore, there is a continuous need for alternative materials used in foam formulations, which develop the same or a lower density than existing mineral filler particles and blowing agents, and maintain or effectively reduce the density and weight of a foamed polymer product.

This and other objects are solved by the subject-matter of the present invention.

According to a first aspect of the present invention, a PVC resin composition for preparing foamed polymer products is provided, said composition comprising
a) at least one PVC resin,
b) at least one filler composition in an amount of 0.1 to 75.0 parts per hundred parts of the at least one PVC resin (phr), wherein the at least one filler composition consists of
   i) 0.5 to 100 parts by weight based on the total dry weight of the filler composition of a first filler selected from the group consisting of surface-reacted calcium carbonate, hydromagnesite and mixtures thereof, and
   ii) 0 to 99.5 parts by weight based on the total dry weight of the filler composition of a second filler selected from the group consisting of ground calcium carbonate, precipitated calcium carbonate and mixtures thereof,
      with the provision that the sum of the first filler and the second filler is 100 parts by weight and
c) at least one blowing agent in an amount of from 0.10 to 10 phr.

The inventors surprisingly found that the foregoing resin composition according to the present invention leads to a foamed polymer product developing a density and part weight being the same or lower than the density and part weight of a corresponding foamed polymer product obtained from the same composition but without providing at least one filler composition in an amount of 0.1 to 75.0 parts per hundred parts of the at least one PVC resin (phr), wherein the at least one filler composition consists of i) 0.5 to 100 parts by weight based on the total dry weight of the filler composition of a first filler selected from the group consisting of surface-reacted calcium carbonate, hydromagnesite and mixtures thereof, and ii) 0 to 99.5 parts by weight based on the total dry weight of the filler composition of a second filler selected from the group consisting of ground calcium carbonate, precipitated calcium carbonate and mixtures thereof, with the provision that the sum of the first filler and the second filler is 100 parts by weight and at least one blowing agent in an amount of from 0.10 to 10 phr. More precisely, the inventors found that the density and part weight of a foamed polymer product can be maintained or effectively be reduced by preparing the polymer foam from a resin composition containing a combination of a defined filler composition in an amount of 0.1 to 75.0 phr of the at least one PVC resin and 0.10 to 10 phr of the at least one blowing agent of the present invention. In addition, the inventors found that the foam structure can in some extent be improved and especially the medium bubble circumference can in some extent be reduced by preparing the polymer foam from a resin composition containing a combination of a defined filler composition in an amount of 0.1 to 75.0 phr of the at least one PVC resin and 0.10 to 10 phr of the at least one blowing agent of the present invention.

Another aspect of the present invention is directed to a method for preparing a foamed polymer product comprising the steps of a) providing a PVC resin composition according to the present invention, and b) subjecting the PVC resin composition of step a) to conditions under which said PVC resin composition is converted into a foamed polymer product.

A still further aspect of the present invention is directed to a foamed polymer product prepared from a PVC resin composition according to the present invention.

Another aspect of the present invention is directed to an article comprising the foamed polymer product according to the present invention, wherein the article is a construction material, a window profile, a duct, a pipe, a wall cladding, an insulation material, a sealant, a sign, a printing media, an exhibition board, an automotive part, a marine part or an aircraft part.

Another aspect of the present invention is directed to the use of a filler selected from the group consisting of surface-reacted calcium carbonate, hydromagnesite, and mixtures thereof, in a foamable PVC resin composition for reducing the density of the obtained foamed PVC product in comparison to a foamed PVC product comprising a filler selected from the group consisting of ground calcium carbonate, precipitated calcium carbonate, and mixtures thereof.

Advantageous embodiments of the above aspects are defined in the corresponding sub-claims.

According to one embodiment of the present invention, the first filler is present in the filler composition in an amount of 1.0 to 90.0 parts by weight, preferably 4.0 to 80.0 parts by weight, more preferably 6.0 to 60.0 parts by weight and most preferably 10.0 to 40.0 parts by weight, based on the total dry weight of the filler composition and the second filler is present in the filler composition in an amount of 10.0 to 99.0 parts by weight, preferably 20.0 to 96.0 parts by weight, more preferably 40.0 to 94.0 parts by weight and most preferably 60.0 to 90.0 parts by weight, based on the total dry weight of the filler composition.

According to another embodiment of the present invention, the at least one filler composition is present in an amount of 1.0 to 60.0 phr, preferably 5.0 to 50 phr, more preferably 10 to 40 phr, even more preferably 15 to 35 phr, and most preferably of 25 phr.

According to another embodiment of the present invention, the at least one PVC resin has a K-value of between 50 to 70, preferably of between 54 to 68.

According to another embodiment of the present invention, the first filler is a surface-reacted calcium carbonate and/or the second filler is a ground calcium carbonate.

According to another embodiment of the present invention, the first filler has a median particle size *d*₅₀ from 1.0 µm to 75 µm, preferably from 2.0 µm to 40 µm, more preferably from 3.0 µm to 25 µm, even more preferably from 3.4 to 20 µm, and most preferably from 3.6 to 15 µm; and/or a particle size *d₉₀* from 2.0 to 100 µm, preferably from 2.5 µm to 50 µm, most preferably from 5.0 µm to 25 µm, and/or a specific surface area of from 20 to 200 m²/g, preferably from 20 to 150 m²/g, more preferably from 30 to 130 m²/g, and most preferably from 40 to 90 m²/g as measured by the BET nitrogen method.

According to another embodiment of the present invention, the second filler has a median particle size *d*₅₀ from 0.1 µm to 50 µm, preferably from 0.5 µm to 25 µm, and most preferably from 0.7 µm to 7.5 µm, and/or a particle size *d₉₀* from 0.5 to 100 µm, preferably from 1.5 µm to 50 µm, most preferably from 2.5 µm to 25 µm, and/or a specific surface area of from 0.1 to 100 m²/g, more preferably from 0.5 to 50 m²/g and most preferably from 2.5 to 20 m²/g as measured by the BET nitrogen method.

According to another embodiment of the present invention, the first filler and/or the second filler is/are surface-treated with at least one surface treatment agent or is/are a blend of a surface-treated filler and a non-surface treated filler, preferably the at least one surface treatment agent is selected from the group consisting of mono- or di-substituted succinic anhydride containing compounds, mono- or di-substituted succinic acid containing compounds, mono- or di-substituted succinic acid salts containing compounds; saturated or unsaturated fatty acids, salts of saturated or unsaturated fatty acids; unsaturated esters of phosphoric acid, salts of unsaturated phosphoric acid esters; mixtures thereof and reaction products thereof, and more preferably is selected from the group consisting of saturated or unsaturated fatty acids, salts of saturated or unsaturated fatty acids, mixtures thereof, and reaction products thereof.

According to another embodiment of the present invention, the at least one blowing agent is present in an amount of between 0.10 phr and 10 phr, more preferably in an amount of between 0.3 phr and 8.0 phr, and most preferably in an amount of between 0.5 and 6.0 phr.

According to another embodiment of the present invention, the at least one blowing agent is a physical blowing agent, an endothermic or exothermic chemical blowing agent or a mixture thereof, preferably the at least one blowing agent is a mixture of an endothermic blowing agent and an exothermic blowing agent, and most preferably a mixture of azodicarbonamide and sodium bicarbonate.

According to another embodiment of the present invention, the PVC resin composition further comprises at least one component selected from the group comprising nucleating agents, stabilizers, impact modifiers, lubricant additives, processing aids and mixtures thereof.

According to another embodiment of the present invention, step b) of the inventive method comprises the steps of b1) feeding the PVC resin composition of step a) into an extruder, b2) exposing the PVC resin composition of step b1) to mechanical force, elevated temperature and/or increased pressure to obtain an at least partially molten PVC resin mixture, b3) passing the at least partially molten PVC resin mixture of step b2) through an extrusion die to form an extrudate, and b4) allowing the extrudate of step b3) to form a foamed polymer product.

According to another embodiment of the present invention, the foamed polymer product has a density in the range of 0.40 to 1.3 g/cm³, preferably in the range of 0.42 to 1.1 g/cm³, more preferably in the range of 0.47 to 1.0 g/cm³, even more preferably in the range of 0.50 to 0.90g/cm³, and most preferably in the range of 0.55 to 0.80 g/cm³.

According to another embodiment of the present invention, the foamed polymer product is an open cell PVC foam, a closed cell PVC foam, a foamed rigid PVC sheet or a foamed rigid PVC board.

It should be understood that for the purposes of the present invention, the following terms have the following meaning:
The term "polymer foam" in the meaning of the present invention refers to a foam having a density of below the density of an unfoamed polymer, preferably of less than 1.3 g/cm³, more preferably of between 0.4 g/cm³ and 1.3 g/cm³, more preferably in the range of 0.42 to 1.1 g/cm³, more preferably in the range of 0.47 to 1.0 g/cm³, even more preferably in the range of 0.50 to 0.90g/cm³, and most preferably in the range of 0.55 to 0.80 g/cm³.

The term "PVC resin" in the meaning of the present invention refers to a polymeric material comprising polyvinyl chloride, either solid or liquid, prior to processing it into a polymeric plastic product.

The term "filler composition" in the meaning of the present invention refers to a composition consisting of surface-reacted calcium carbonate and/or hydromagnesite and optionally ground calcium carbonate and/or precipitated calcium carbonate that is used as filler in the PVC resin.

A "surface-reacted calcium carbonate" according to the present invention is a reaction product of ground natural calcium carbonate (GNCC) or precipitated calcium carbonate (PCC) treated with carbon dioxide and one or more H₃O⁺ ion donors, wherein the carbon dioxide is formed in situ by the H₃O⁺ ion donors treatment and/or is supplied from an external source. A H₃O⁺ ion donor in the context of the present invention is a Bronsted acid and/or an acid salt

The term "hydromagnesite" or "basic magnesium carbonate" according to the present invention is a naturally occurring mineral which is found, for example, in magnesium rich minerals such as serpentine and altered magnesium rich igneous rocks, or a synthetically prepared material. Hydromagnesite is described as having the chemical formula Mg₅(CO₃)₄(OH)₂·4H₂O.

The term "ground calcium carbonate" (GCC) or "ground natural calcium carbonate" (GNCC) as used herein refers to a particulate material obtained from natural calcium carbonate-containing minerals (e.g. chalk, limestone, marble or dolomite) which has been processed in a wet and/or dry comminution step, such as crushing and/or grinding, and optionally has been subjected to further steps such as screening and/or fractionation, for example, by a cyclone or a classifier.

A "precipitated calcium carbonate" (PCC) in the meaning of the present invention is a synthesized material, obtained by precipitation following a reaction of carbon dioxide and calcium hydroxide (hydrated lime) in an aqueous environment. Alternatively, precipitated calcium carbonate can also be obtained by reacting calcium- and carbonate salts, for example calcium chloride and sodium carbonate, in an aqueous environment. PCC may have a vateritic, calcitic or aragonitic crystalline form. PCCs are described, for example, in EP 2 447 213 A1, EP 2 524 898 A1, EP 2 371 766 A1, EP 2 840 065 A1, or WO 2013/142473 A1.

The term "blowing agent" in the meaning of the present invention refers to agents which are capable of producing a cellular structure in a polymer product during the foaming process.

The term "phr" in the meaning of the present invention means "parts per hundred resins". In particular, if 100 parts of polymer resin are used, the quantity of other ingredients is expressed in relation to this 100 parts of polymer resin by weight.

The term "total solids content" and "total dry weight" referred to herein may be used interchangeably. A "dry" material (e.g., dry surface-reacted calcium carbonate) may be defined by its total moisture content which, unless specified otherwise, is less than or equal to 2.0 wt.%, preferably less than or equal to 1.0 wt.%, more preferably less than or equal to 0.5 wt.%, even more preferably less than or equal to 0.2 wt.%, and most preferably between 0.03 and 0.07 wt.%, based on the total weight of the dried material. Unless specified otherwise, the term "drying" refers to a process according to which water is removed from a material to be dried such that a constant weight of the obtained "dried" material at 120 °C is reached, wherein the mass (sample size 5 g) does not change more than 1 mg over a period of 30 s.

The "K-value" of a polymer is used to denote the degree of polymerization or molecular weight and is calculated from the inherent viscosity.

The "particle size" of particulate materials other than surface-reacted calcium carbonate (e.g., GCC or PCC) herein is described by its distribution of particle sizes *d*ₓ(wt). Therein, the value *d*ₓ(wt) represents the diameter relative to which *x* % by weight of the particles have diameters less than *d*ₓ(wt). This means that, for example, the *d*₂₀(wt) value is the particle size at which 20 wt.% of all particles are smaller than that particle size. The *d*₅₀(wt) value is thus the weight median particle size, i.e. 50 wt.% of all particles are smaller than that particle size and the *d*₉₈(wt) value, referred to as weight-based top cut, is the particle size at which 98 wt.% of all particles are smaller than that particle size. The weight-based median particle size *d*₅₀(wt) and top cut *d*₉₈(wt) are measured by the sedimentation method, which is an analysis of sedimentation behaviour in a gravimetric field. The measurement is made with a Sedigraph™ 5100 of Micromeritics Instrument Corporation, USA. The method and the instrument are known to the skilled person and are commonly used to determine particle size distributions. The measurement is carried out in an aqueous solution of 0.1 wt.% Na₄P₂O₇. The samples are dispersed using a high speed stirrer and sonication.

The "particle size" of surface-reacted calcium carbonate herein is described as volume-based particle size distribution *d*ₓ(vol). Therein, the value *d*ₓ(vol) represents the diameter relative to which *x* % by volume of the particles have diameters less than *d*ₓ(vol). This means that, for example, the *d*₂₀(vol) value is the particle size at which 20 vol.% of all particles are smaller than that particle size. The *d*₅₀(vol) value is thus the volume median particle size, i.e. 50 vol.% of all particles are smaller than that particle size and the *d*₉₈(vol) value, referred to as volume-based top cut, is the particle size at which 98 vol.% of all particles are smaller than that particle size. The volume-based median particle size *d*₅₀(vol) and top cut *d*₉₈(vol) are evaluated using a Malvern Mastersizer 2000 Laser Diffraction System (Malvern Instruments Plc., Great Britain). The raw data obtained by the measurement is analyzed using the Mie theory, with a particle refractive index of 1.57 and an absorption index of 0.005//using the Fraunhofer theory. The methods and instruments are known to the skilled person and are commonly used to determine particle size distributions.

Throughout the present document, the term "specific surface area" (in m²/g), which is used to define functionalized calcium carbonate or other materials, refers to the specific surface area as determined by using the BET method (using nitrogen as adsorbing gas). Throughout the present document, the specific surface area (in m²/g) is determined using the BET method (using nitrogen as adsorbing gas), which is well known to the skilled man (ISO 9277:2010). The total surface area (in m²) of the surface material is then obtained by multiplication of the specific surface area and the mass (in g) of the corresponding sample.

For the purpose of the present invention, the term "viscosity" refers to the Brookfield viscosity. The Brookfield viscosity is measured by a Brookfield DV-III Ultra viscometer at 24 °C ± 3 °C at 100 rpm using an appropriate spindle of the Brookfield RV-spindle set and is specified in mPa·s. Once the spindle has been inserted into the sample, the measurement is started with a constant rotating speed of 100 rpm. The reported Brookfield viscosity values are the values displayed 60 seconds after the start of the measurement. Based on his technical knowledge, the skilled person will select a spindle from the Brookfield RV-spindle set which is suitable for the viscosity range to be measured. For example, for a viscosity range between 200 and 800 mPa·s the spindle number 3 may be used, for a viscosity range between 400 and 1 600 mPa·s the spindle number 4 may be used, for a viscosity range between 800 and 3 200 mPa·s the spindle number 5 may be used, for a viscosity range between 1 000 and 2 000 000 mPa·s the spindle number 6 may be used, and for a viscosity range between 4 000 and 8 000 000 mPa·s the spindle number 7 may be used.

For the purpose of the present invention the "porosity" or "pore volume" refers to the intra-particle intruded specific pore volume. In the context of the present invention, the term "pore" is to be understood as describing the space that is found between and/or within particles, i.e. that is formed by the particles as they pack together under nearest neighbour contact (interparticle pores), such as in a powder or a compact, and/or the void space within porous particles (intraparticle pores), and that allows the passage of liquids under pressure when saturated by the liquid and/or supports absorption of surface wetting liquids. The specific pore volume is measured using a mercury intrusion porosimetry measurement using a Micromeritics Autopore V 9620 mercury porosimeter having a maximum applied pressure of mercury 414 MPa (60 000 psi), equivalent to a Laplace throat diameter of 0.004 µm. The equilibration time used at each pressure step is 20 s. The sample material is sealed in a 3 cm³ chamber powder penetrometer for analysis. The data are corrected for mercury compression, penetrometer expansion and sample material elastic compression using the software Pore-Comp (Gane, P.A.C., Kettle, J.P., Matthews, G.P. and Ridgway, C.J., "Void Space Structure of Compressible Polymer Spheres and Consolidated Calcium Carbonate Paper-Coating Formulations", Industrial and Engineering Chemistry Research, 1996, 35(5), 1753 - 1764). The total pore volume seen in the cumulative intrusion data is separated into two regions with the intrusion data from 214 µm down to about 1 to 4 µm showing the coarse packing of the sample between any agglomerate structures contributing strongly. Below these diameters lies the fine interparticle packing of the particles themselves. If they also have intraparticle pores, then this region appears bimodal, and by taking the specific pore volume intruded by mercury into pores finer than the modal turning point, i.e. finer than the bimodal point of inflection, we thus define the specific intraparticle pore volume. The sum of these three regions gives the total overall pore volume of the powder, but depends strongly on the original sample compaction/settling of the powder at the coarse pore end of the distribution. By taking the first derivative of the cumulative intrusion curve, the pore size distributions based on equivalent Laplace diameter, inevitably including pore-shielding, are revealed. The differential curves clearly show the coarse agglomerate pore structure region, the interparticle pore region and the intraparticle pore region, if present. Knowing the intraparticle pore diameter range it is possible to subtract the remainder interparticle and interagglomerate pore volume from the total pore volume to deliver the desired pore volume of the internal pores alone in terms of the pore volume per unit mass (specific pore volume). The same principle of subtraction, of course, applies for isolating any of the other pore size regions of interest.

A "suspension" or "slurry" in the meaning of the present invention refers to a mixture comprising at least one insoluble solid in a liquid medium, for example water, and optionally further additives, and usually contains large amounts of solids and, thus, is more viscous (higher viscosity) and can have a higher density than the liquid medium from which it is formed.

Where the term "comprising" or "containing" is used in the present description and claims, it does not exclude other elements. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This e.g. means that, unless the context clearly dictates otherwise, the term "obtained" does not mean to indicate that, e.g. an embodiment must be obtained by e.g. the sequence of steps following the term "obtained" even though such a limited understanding is always included by the terms "obtained" or "defined" as a preferred embodiment.

In the following, the details and preferred embodiments of the present invention will be described in more detail. Embodiments that refer to the PVC resin composition will also refer to the inventive method, the foamed polymer product, the article and the inventive use and vice versa.

According to the present invention a PVC resin composition for preparing foamed polymer products is provided, said composition comprising a) at least one PVC resin, b) at least one filler composition in an amount of 0.1 to 75.0 parts per hundred parts of the at least one PVC resin (phr), wherein the at least one filler composition consists of i) 0.5 to 100 parts by weight based on the total dry weight of the filler composition of a first filler selected from the group consisting of surface-reacted calcium carbonate, hydromagnesite and mixtures thereof, and ii) 0 to 99.5 parts by weight based on the total dry weight of the filler composition of a second filler selected from the group consisting of ground calcium carbonate, precipitated calcium carbonate and mixtures thereof, with the provision that the sum of the first filler and the second filler is 100 parts by weight and c) at least one blowing agent in an amount of from 0.10 to 10 phr.

### The at least one PVC resin

The inventive PVC resin composition for preparing foamed polymer products comprises at least one PVC resin. The polymer resin represents the backbone of the composition and provides strength, flexibility, toughness and durability to the final foamed rigid polymer product. The at least one polymer resin as used herein can be processed into a PVC foam.

The term "at least one" PVC resin in the meaning of the present invention means that the resin comprises, preferably consists of, one or more PVC resin(s).

In one embodiment of the present invention, the at least one PVC resin in the PVC resin composition comprises, preferably consists of, one PVC resin. Alternatively, the at least one PVC resin comprises, preferably consists of, two or more PVC resins. For example, the at least one PVC resin comprises, preferably consists of, two or three PVC resins.

Preferably, the at least one PVC resin in the PVC resin composition comprises, more preferably consists of, one PVC resin.

Preferably, the polyvinyl chloride resin comprises a polyvinyl chloride homopolymer or a copolymer of vinyl chloride with a copolymerizable ethylenically unsaturated monomer. In case a homopolymer of polyvinyl chloride is provided, the polyvinyl chloride resin contains monomers consisting of vinyl chloride alone.

If a polyvinyl chloride copolymer is provided, the polyvinyl chloride resin contains a mixture of monomers comprising a predominant amount of monomers consisting of vinyl chloride. In one preferred embodiment, the polyvinyl chloride resin contains a mixture of monomers comprising an amount of monomers consisting of vinyl chloride of at least 60 wt.-%, more preferably of at least 70 wt.-% and most preferably of at least 80 wt.-%, based on the total weight of the monomer mixture. Vinyl chloride copolymers are preferably composed of vinyl chloride and from 1 to 40 wt.-% of a copolymerizable ethylenically unsaturated monomer, preferably of at most of 30 wt.-% and most preferably of at most of 20 wt.-% of a copolymerizable ethylenically unsaturated monomer, based on the total weight of the monomer mixture.

Preferably, the copolymerizable ethylenically unsaturated monomer is selected from the group consisting of vinylidene chloride, vinyl acetate, vinyl butyrate, vinyl benzoate, vinylidene chloride, diethyl fumarate, diethyl maleate, vinyl propionate, methyl acrylate, butyl acrylate, methyl methacrylate, ethyl methacrylate, butyl methacrylate, styrene, vinyl ethers such as vinyl ethyl ether, vinyl chloroethyl ether and vinyl phenyl ether, vinyl ketones such as vinyl methyl ketone and vinyl phenyl ketone, acrylonitrile, chloroacrylonitrile and mixtures thereof. It is further preferred that the polyvinyl chloride copolymers of the present invention comprise monomers of vinyl chloride and vinyl acetate, vinyl chloride and vinyl acetate and maleic anhydride or vinyl chloride and vinylidene chloride.

In one preferred embodiment, the polyvinyl chloride resin comprises a homopolymer of polyvinyl chloride. In another preferred embodiment, the polyvinyl chloride resin consists of a homopolymer of polyvinyl chloride.

Alternatively, the at least one polyvinyl chloride resin comprises a mixture of a polyvinyl chloride homopolymer and a polyvinyl chloride copolymer comprising monomers of vinyl chloride and vinyl acetate, vinyl chloride and vinyl acetate and maleic anhydride or vinyl chloride and vinylidene chloride.

If the at least one polyvinyl chloride resin according to the present invention comprises a mixture of a polyvinyl chloride homopolymer and a polyvinyl chloride copolymer, the mole ratio of the homopolymer and the copolymer is from 99:1 to 1:99, more preferably from 50:1 to 1:50, even more preferably from 25:1 to 1:25 and most preferably from 10:1 to 1:10. In one especially preferred embodiment of the present invention, the mole ratio of the homopolymer and the copolymer is from 90:1 to 1:1, more preferably from 90:1 to 10:1 and most preferably from 90:1 to 50:1. In another preferred embodiment, the mole ratio of the homopolymer and the copolymer is about 1:1.

Although any homopolymer or copolymer of polyvinyl chloride may be utilized, it is even more preferred that the polyvinyl chloride polymer has a K-value of between 50 and 70 which corresponds to a weight average molecular weight from 40,000 to 90,000 g/mole. The "K-value" of a polymer is used to denote the degree of polymerization or molecular weight and is calculated from the inherent viscosity. Preferably, the polyvinyl chloride resin is selected such that the polymer develops a K-value between 54 and 68 (e.g., a weight average molecular weight of from 47,000 to 82,000 g/mole) and more preferably between 58 and 62 (e.g., a weight average molecular weight of from 56,000 to 66,000 g/mole). For example, the polyvinyl chloride polymer has a K-value of about 60 (having a weight average molecular weight of 61,000 g/mole). In one especially preferred embodiment, the polyvinyl chloride polymer comprises a homopolymer having a K-value of 60 (having a weight average molecular weight of 61,000 g/mole).

Polyvinyl chloride resins suitable in the inventive composition are available from a wide variety of commercial sources. Useful polyvinyl chloride resins include the resins available from INEOS Chlor Americas Inc., Wilmington, USA as Evipol SH6030 PVC or from Vynova, Europe as S6030. Further PVC resins suitable for the present invention are available from Shin-Etsu, Vestolit, LVM, Aiscondel, Cires, Solvin, Arkema or Vinnolit.

In one preferred embodiment, the PVC resin composition of the present invention comprises the at least one PVC resin in an amount of at least 50 wt.-%, more preferably from 60 wt.-% to 90 wt.-% and most preferably from 70 wt.-% to 90 wt.-%, based on the total weight of the resin composition. In one preferred embodiment, the resin composition of the present invention comprises the at least one polymer resin in an amount of between 70 wt.-% and 80 wt.-%, based on the total weight of the resin composition. For example, the resin composition of the present invention comprises at least one polyvinyl chloride resin in an amount of about 73 wt.-%, based on the total weight of the resin composition.

The at least one polymer resin may be in the form of flakes, granules, pellets, and/or a powder.

### The at least one filler composition

The inventive PVC resin composition for preparing foamed polymer products comprises at least one filler composition in an amount of 0.1 to 75.0 parts per hundred parts of the at least one PVC resin (phr). The at least one filler composition consists of
i) 0.5 to 100 parts by weight based on the total dry weight of the filler composition of a first filler selected from the group consisting of surface-reacted calcium carbonate, hydromagnesite and mixtures thereof, and
ii) 0 to 99.5 parts by weight based on the total dry weight of the filler composition of a second filler selected from the group consisting of ground calcium carbonate, precipitated calcium carbonate and mixtures thereof,
with the provision that the sum of the first filler and the second filler is 100 parts by weight.

### • the first filler

As already set out above the first filler is selected from the group consisting of surface-reacted calcium carbonate, hydromagnesite and mixtures thereof.

According to one embodiment of the present invention the first filler comprises, preferably consist of surface-reacted calcium carbonate.

It is appreciated that the surface-reacted calcium carbonate can be one or a mixture of different kinds of surface-reacted calcium carbonate(s). In one embodiment of the present invention, the surface-reacted calcium carbonate comprises, preferably consists of, one kind of surface-reacted calcium carbonate. Alternatively, the surface-reacted calcium carbonate comprises, preferably consists of, two or more kinds of surface-reacted calcium carbonates. For example, the surface-reacted calcium carbonate comprises, preferably consists of, two or three kinds of surface-reacted calcium carbonates. Preferably, the surface-reacted calcium carbonate comprises, more preferably consists of, one kind of surface-reacted calcium carbonate.

The surface-reacted calcium carbonate is a reaction product of ground natural calcium carbonate (GNCC) or precipitated calcium carbonate (PCC) treated with carbon dioxide and one or more H₃O⁺ ion donors, wherein the carbon dioxide is formed in situ by the H₃O⁺ ion donors treatment and/or is supplied from an external source. Because of the reaction of ground natural calcium carbonate or precipitated calcium carbonate with carbon dioxide and the one or more H₃O⁺ ion donors, surface-reacted calcium carbonate may comprise GNCC or PCC and at least one water-insoluble calcium salt other than calcium carbonate.

In a preferred embodiment, said surface-reacted calcium carbonate comprises GNCC or PCC and at least one water-insoluble calcium salt other than calcium carbonate which is present on at least part of the surface of said GNCC or PCC.

An H₃O⁺ ion donor in the context of the present invention is a Bronsted acid and/or an acid salt.

In a preferred embodiment of the invention, the surface-reacted calcium carbonate is obtained by a process comprising the steps of:
(a) providing a suspension of ground natural calcium carbonate (GNCC) or precipitated calcium carbonate (PCC);
(b) adding at least one acid having a pKₐ value of 0 or less at 20 °C, or having a pKₐ value from 0 to 2.5 at 20 °C to the suspension provided in step (a); and
(c) treating the suspension provided in step (a) with carbon dioxide before, during or after step (b).

According to another embodiment, the surface-reacted calcium carbonate is obtained by a process comprising the steps of:
(a) providing a ground natural calcium carbonate (GNCC) or precipitated calcium carbonate (PCC);
(b) providing at least one water-soluble acid;
(c) providing gaseous carbon dioxide; and
(d) contacting said GNCC or PCC provided in step (a), the at least one acid provided in step (b) and the gaseous carbon dioxide provided in step (c);
characterized in that
(i) the at least one acid provided in step (b) has a pKₐ of greater than 2.5 and less than or equal to 7 at 20 °C, associated with the ionisation of its first available hydrogen, and a corresponding anion is formed on loss of this first available hydrogen capable of forming a water-soluble calcium salt; and
(ii) following contacting the at least one water-soluble acid provided in step (b) and the GNCC or PCC provided in step (a), at least one water-soluble salt, which in the case of a hydrogen-containing salt has a pKₐ of greater than 7 at 20 °C, associated with the ionisation of the first available hydrogen, and the salt anion of which is capable of forming water-insoluble calcium salts, is additionally provided.

The source of calcium carbonate, e.g., ground natural calcium carbonate (GNCC), preferably is selected from calcium carbonate-containing minerals selected from the group comprising marble, chalk, limestone and mixtures thereof. Natural calcium carbonate may comprise further naturally occurring components such as magnesium carbonate, alumino silicate etc. According to one embodiment, natural calcium carbonate, such as GNCC, comprises aragonitic, vateritic or calcitic mineralogical crystal forms of calcium carbonate or mixtures thereof.

In general, the grinding of ground natural calcium carbonate may be performed in a dry or wet grinding process and may be carried out with any conventional grinding device, for example, under conditions such that comminution predominantly results from impacts with a secondary body, i.e. in one or more of: a ball mill, a rod mill, a vibrating mill, a roll crusher, a centrifugal impact mill, a vertical bead mill, an attrition mill, a pin mill, a hammer mill, a pulverizer, a shredder, a de-clumper, a knife cutter, or other such equipment known to the skilled person. In case the ground natural calcium carbonate comprises wet ground calcium carbonate, the grinding step may be performed under conditions such that autogenous grinding takes place and/or by horizontal ball milling, in the presence or absence of grinding aids and/or dispersants, and/or other such processes known to the skilled person. The wet processed ground natural calcium carbonate thus obtained may be washed and dewatered by well-known processes, e.g., by flocculation, filtration or forced evaporation prior to drying. The subsequent step of drying (if necessary) may be carried out in a single step such as spray drying, or in at least two steps. It is also common that such a mineral material undergoes a beneficiation step (such as a flotation, bleaching or magnetic separation step) to remove impurities.

As already indicated hereinabove, a precipitated calcium carbonate (PCC) in the meaning of the present invention is a synthesized material, generally obtained by precipitation following a reaction of carbon dioxide and calcium hydroxide in an aqueous environment or by precipitation of calcium and carbonate ions, for example CaCl₂ and Na₂CO₃, out of solution. Further possible ways of producing PCC are the lime soda process, or the Solvay process in which PCC is a by-product of ammonia production. Precipitated calcium carbonate exists in three primary crystalline forms: calcite, aragonite and vaterite, and there are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, and prismatic (P-PCC). Aragonite is an orthorhombic structure with typical crystal habits of twinned hexagonal prismatic crystals, as well as a diverse assortment of thin elongated prismatic, curved bladed, steep pyramidal, chisel shaped crystals, branching tree, and coral or worm-like form. Vaterite belongs to the hexagonal crystal system. The obtained aqueous PCC slurry can be mechanically dewatered and dried.

According to one embodiment of the present invention, the precipitated calcium carbonate comprises aragonitic, vateritic or calcitic mineralogical crystal forms of calcium carbonate or mixtures thereof.

Precipitated calcium carbonate may be ground prior to the treatment with carbon dioxide and at least one H₃O⁺ ion donor by the same means as used for grinding natural calcium carbonate and described above.

According to one embodiment of the present invention, the natural or precipitated calcium carbonate is in form of particles. Alternatively, the natural or precipitated calcium carbonate may be used dry or suspended in water. Preferably, a corresponding aqueous slurry has a content of natural or precipitated calcium carbonate within the range of from 1 to 90 wt.%, more preferably from 3 to 60 wt.%, even more preferably from 5 to 40 wt.%, and most preferably from 10 to 25 wt.%, based on the total weight of said slurry.

The one or more H₃O⁺ ion donor used for the preparation of surface-reacted calcium carbonate may be any strong acid, medium-strong acid, or weak acid, or mixtures thereof, generating H₃O⁺ ions under the preparation conditions. According to the present invention, the at least one H₃O⁺ ion donor can also be an acid salt, generating H₃O⁺ ions under the preparation conditions.

According to one embodiment, the at least one H₃O⁺ ion donor is a strong acid having a pKₐ of 0 or less at 20 °C.

According to another embodiment, the at least one H₃O⁺ ion donor is a medium-strong acid having a pKₐ value from 0 to 2.5 at 20 °C.

If the pKₐ at 20 °C is 0 or less, the acid is preferably selected from sulphuric acid, hydrochloric acid, or mixtures thereof. If the pKₐ at 20 °C is from 0 to 2.5, the H₃O⁺ ion donor is preferably selected from sulphurous acid, phosphoric acid or mixtures thereof. The at least one H₃O⁺ ion donor can also be an acid salt, for example, HSO₄⁻ or H₂PO₄⁻, being at least partially neutralized by a corresponding cation such as NH₄⁺, Li⁺, Na⁺ or K⁺, or HPO₄²⁻, being at least partially neutralized by a corresponding cation such as NH₄⁺, Li⁺, Na⁺, and/or K⁺. The at least one H₃O⁺ ion donor can also be a mixture of one or more acids and one or more acid salts.

According to one embodiment of the present invention, the at least one H₃O⁺ ion donor is selected from the group consisting of hydrochloric acid, sulphuric acid, sulphurous acid, phosphoric acid, and inorganic salt thereof and mixtures thereof. Preferably the at least one H₃O⁺ ion donor is selected from the group consisting of hydrochloric acid, sulphuric acid, sulphurous acid, phosphoric acid, H₂PO₄⁻, being at least partially neutralized by a corresponding cation such as NH₄⁺, Li⁺, Na⁺ and/or K⁺, HPO₄²⁻, being at least partially neutralized by a corresponding cation such as NH₄⁺, Li⁺, Na⁺, and/or K⁺ and mixtures thereof, more preferably the at least one acid is selected from the group consisting of hydrochloric acid, sulphuric acid, sulphurous acid, phosphoric acid, or mixtures thereof. A particularly preferred H₃O⁺ ion donor is phosphoric acid.

The one or more H₃O⁺ ion donor can be added to the suspension in solid form or as a concentrated solution or a more diluted solution. According to a preferred embodiment, the at least one H₃O⁺ ion donor is provided in form of a solution.

According to one embodiment the at least one H₃O⁺ ion donor is provided in form of an aqueous solution comprising the at least one H₃O⁺ ion donor in an amount from 0.1 to 100 wt.-%, based on the total weight of the aqueous solution, preferably in an amount from 1 to 80 wt.-%, more preferably in an amount from 10 to 50 wt.-%, and most preferably in an amount from 20 to 40 wt.-%.

According to another embodiment, the at least one H₃O⁺ ion donor is provided in an amount from 1 to 60 wt.-%, based on the total weight of the ground natural calcium carbonate or precipitated calcium carbonate, preferably from 5 to 55 wt.-%, more preferably from 7 to 50 wt.-%, and most preferably from 10 to 40 wt.-%.

As an alternative, it is also possible to add the H₃O⁺ ion donor to the water before the natural or precipitated calcium carbonate is suspended.

In a next step, the natural or precipitated calcium carbonate is treated with carbon dioxide. If a strong acid such as sulphuric acid or hydrochloric acid is used for the H₃O⁺ ion donor treatment of the natural or precipitated calcium carbonate, the carbon dioxide is automatically formed. Alternatively or additionally, the carbon dioxide can be supplied from an external source.

H₃O⁺ ion donor treatment and treatment with carbon dioxide can be carried out simultaneously which is the case when a strong or medium-strong acid is used. It is also possible to carry out H₃O⁺ ion donor treatment first, e.g., with a medium strong acid having a pKₐ in the range of 0 to 2.5 at 20 °C, wherein carbon dioxide is formed in situ, and thus, the carbon dioxide treatment will automatically be carried out simultaneously with the H₃O⁺ ion donor treatment, followed by the additional treatment with carbon dioxide supplied from an external source.

Preferably, the concentration of gaseous carbon dioxide in the suspension is, in terms of volume, such that the ratio (volume of suspension): (volume of gaseous carbon dioxide) is from 1:0.05 to 1:70, even more preferably 1:0.05 to 1:60 and more preferably from 1:0.05 to 1:40; and most preferably from 1:0.05 to 1:30..

In a preferred embodiment, the H₃O⁺ ion donor treatment step and/or the carbon dioxide treatment step are repeated at least once, more preferably several times. According to one embodiment, the at least one H₃O⁺ ion donor is added over a time period of at least about 5 min, preferably at least about 10 min, typically from about 10 to about 20 min, more preferably about 30 min, even more preferably about 45 min, and sometimes about 1 h or more.

Subsequent to the H₃O⁺ ion donor treatment and carbon dioxide treatment, the pH of the aqueous suspension, measured at 20 °C, naturally reaches a value of greater than 6.0, preferably greater than 6.5, more preferably greater than 7.0, even more preferably greater than 7.5, thereby preparing the surface-reacted natural or precipitated calcium carbonate as an aqueous suspension having a pH of greater than 6.0, preferably greater than 6.5, more preferably greater than 7.0, even more preferably greater than 7.5.

The H₃O⁺ ion donor treatment may be carried out at a temperature from 20 to 90 °C, preferably from 30 to 85 °C, more preferably from 40 to 80 °C, even more preferably from 50 to 75 °C, and most preferably from 60 to 70 °C.

Further details about the preparation of the surface-reacted natural calcium carbonate are disclosed in WO 00/39222 A1, WO 2004/083316 A1, WO 2005/121257 A2, WO 2009/074492 A1, EP 2 264 108 A1, EP 2 264 109 A1 and US 2004/0020410 A1, as well as in the un-published patent application EP 19 169 504.8 the content of these references herewith being included in the present document.

Similarly, surface-reacted precipitated calcium carbonate may be obtained. As can be taken in detail from WO 2009/074492 A1 or from the un-published patent application EP 19 169 504.8, surface-reacted precipitated calcium carbonate is obtained by contacting precipitated calcium carbonate with H₃O⁺ ions and with anions being solubilized in an aqueous medium and being capable of forming water-insoluble calcium salts, in an aqueous medium to form a slurry of surface-reacted precipitated calcium carbonate, wherein said surface-reacted precipitated calcium carbonate comprises an insoluble, at least partially crystalline calcium salt of said anion formed on the surface of at least part of the precipitated calcium carbonate.

Said solubilized calcium ions correspond to an excess of solubilized calcium ions relative to the solubilized calcium ions naturally generated on dissolution of precipitated calcium carbonate by H₃O⁺ ions, where said H₃O⁺ ions are provided solely in the form of a counter ion to the anion, i.e. via the addition of the anion in the form of an acid or non-calcium acid salt, and in absence of any further calcium ion or calcium ion generating source.

Said excess solubilized calcium ions are preferably provided by the addition of a soluble neutral or acid calcium salt, or by the addition of an acid or a neutral or acid non-calcium salt which generates a soluble neutral or acid calcium salt in situ.

Said H₃O⁺ ions may be provided by the addition of an acid or an acid salt of said anion, or the addition of an acid or an acid salt which simultaneously serves to provide all or part of said excess solubilized calcium ions.

In a further preferred embodiment of the preparation of the surface-reacted natural or precipitated calcium carbonate, the natural or precipitated calcium carbonate is reacted with the acid and/or the carbon dioxide in the presence of at least one compound selected from the group consisting of silicate, silica, aluminium hydroxide, earth alkali aluminate such as sodium or potassium aluminate, magnesium oxide, aluminium sulphate or mixtures thereof. Preferably, the at least one silicate is selected from an aluminium silicate, a calcium silicate, or an earth alkali metal silicate.

In another preferred embodiment, said at least one compound is aluminium sulphate hexadecahydrate. In a particularly preferred embodiment, said at least one compound is aluminium sulphate hexadecahydrate, wherein the at least one H₃O⁺ ion donor is selected from the group consisting of hydrochloric acid, sulphuric acid, sulphurous acid, phosphoric acid, citric acid, oxalic acid, acetic acid, formic acid and mixtures thereof, more preferably the molar ratio of said H₃O⁺ ion donor to the natural or precipitated calcium carbonate is from 0.01:1 to 4:1, more preferably from 0.02:1 to 2:1, even more preferably from 0.05:1 to 1:1 and most preferably from 0.1:1 to 0.58:1.

According to another embodiment of the preparation of the surface-reacted natural or precipitated calcium carbonate, such a compound is not present.

In a further preferred embodiment of the preparation of the surface-reacted natural or precipitated calcium carbonate, the natural or precipitated calcium carbonate is reacted with the acid and/or the carbon dioxide in the presence of at least one water-soluble inorganic magnesium salt.

The at least one water-soluble, inorganic magnesium salt may be selected from any water-soluble, inorganic magnesium salt known to the skilled person such as, for example, magnesium chloride, magnesium nitrate, magnesium sulfate, magnesium hydrogen sulfate, magnesium bromide, magnesium iodide, magnesium chlorate, or magnesium iodate. The water-soluble, inorganic magnesium salt may be an anhydrous salt or a hydrate salt. As used herein, a "hydrate" is an inorganic salt containing water molecules combined in a definite ratio as an integral part of the crystal. Depending on the number of water molecules per formula unit of salt, the hydrate may be designated as monohydrate, dihydrate, trihydrate, tetrahydrate, pentahydrate, hexahydrate, heptahydrate, octahydrate, nonahydrate, decahydrate, hemihydrates, etc.

The at least one water-soluble, inorganic magnesium salt may be selected from the group consisting of magnesium chloride, magnesium nitrate, magnesium sulfate, magnesium hydrogen sulfate, magnesium bromide, magnesium iodide, magnesium chlorate, magnesium iodate, hydrates thereof, and mixtures thereof, preferably the at least one water-soluble, inorganic magnesium salt is selected from the group consisting of magnesium bromide, magnesium nitrate, magnesium sulfate, hydrates thereof, and mixtures thereof, and most preferably the at least on water-soluble, inorganic magnesium salt is magnesium sulfate or a hydrate thereof.

More precisely, the at least one water-soluble, inorganic magnesium salt may be selected from the group consisting of anhydrous magnesium chloride, magnesium chloride hexahydrate, anhydrous magnesium nitrate, magnesium nitrate dihydrate, magnesium nitrate hexahydrate, anhydrous magnesium sulfate, magnesium sulfate monohydrate, magnesium sulfate tetrahydrate, magnesium sulfate pentahydrate, magnesium sulfate hexahydrate, magnesium sulfate heptahydrate, magnesium hydrogen sulfate, anhydrous magnesium bromide, magnesium bromide hexahydrate, anhydrous magnesium iodide, magnesium iodide hexahydrate, magnesium iodide octahydrate, anhydrous magnesium chlorate, magnesium chlorate hexahydrate, anhydrous magnesium iodate, magnesium iodate tetrahydrate, and mixtures thereof, preferably the at least one water-soluble, inorganic magnesium salt is selected from the group consisting of anhydrous magnesium chloride, magnesium chloride hexahydrate, anhydrous magnesium nitrate, magnesium nitrate dihydrate, magnesium nitrate hexahydrate, anhydrous magnesium sulfate, magnesium sulfate monohydrate, magnesium sulfate tetrahydrate, magnesium sulfate pentahydrate, magnesium sulfate hexahydrate, magnesium sulfate heptahydrate, and mixtures thereof, more preferably the at least one water-soluble, inorganic magnesium salt is anhydrous magnesium nitrate, magnesium nitrate dihydrate, magnesium nitrate hexahydrate, anhydrous magnesium sulfate, magnesium sulfate monohydrate, magnesium sulfate tetrahydrate, magnesium sulfate pentahydrate, magnesium sulfate hexahydrate, magnesium sulfate heptahydrate, and mixtures thereof, and most preferably the at least one water-soluble, inorganic magnesium salt is anhydrous magnesium sulfate, magnesium sulfate monohydrate, magnesium sulfate tetrahydrate, magnesium sulfate pentahydrate, magnesium sulfate hexahydrate, magnesium sulfate heptahydrate, or a mixture thereof.

The at least one water-soluble, inorganic magnesium salt may be provided in an amount from 0.3 to 270 mmol Mg²⁺/mol Ca²⁺ of the natural ground or precipitated calcium carbonate, preferably from 0.7 to 200 mmol Mg²⁺/mol Ca²⁺, more preferably from 2 to 135 mmol Mg²⁺/mol Ca²⁺, and most preferably from 3 to 70 mmol Mg²⁺/mol Ca²⁺.

The at least one water-soluble, inorganic magnesium salt may be provided in an amount so that the amount of Mg²⁺ in said magnesium salt is from 0.05 to 20 wt.-%, based on the total weight of the natural ground or precipitated calcium carbonate, preferably from 0.1 to 15 wt.-%, more preferably from 0.3 to 10 wt.-%, and most preferably from 0.4 to 5 wt.-%.

Alternatively, the at least one water-soluble, inorganic magnesium salt may be provided in an amount from 0.05 to 40 wt.-%, based on the total weight of the natural ground or precipitated calcium carbonate, preferably from 0.1 to 30 wt.-%, more preferably from 0.3 to 20 wt.-%, and most preferably from 0.5 to 10 wt.-%.

The at least one water-soluble, inorganic magnesium salt can be provided in form of a solution or as a dry material.

The foregoing components can be added to an aqueous suspension comprising the natural or precipitated calcium carbonate before adding the acid and/or carbon dioxide.

Alternatively, the foregoing components can be added to the aqueous suspension of natural or precipitated calcium carbonate while the reaction of natural or precipitated calcium carbonate with an acid and carbon dioxide has already started. However any other possible order is also suitable. Further details about the preparation of the surface-reacted natural or precipitated calcium carbonate in the presence of at least one silicate and/or silica and/or aluminium hydroxide and/or earth alkali aluminate component(s) are disclosed in WO 2004/083316 A1, the content of this reference herewith being included in the present document. Further details about the preparation of the surface-reacted natural or precipitated calcium carbonate in the presence of at least one water-soluble, inorganic magnesium salt are disclosed in the un-published patent application EP 19 169 504.8, the content of this reference herewith being included in the present document.

The surface-reacted natural ground or precipitated calcium carbonate may comprise a calcium carbonate-comprising material, and at least one water-insoluble calcium salt other than calcium carbonate, for example, tricalcium phosphate and/or apatitic calcium phosphate, preferably hydroxylapatite, octacalcium phosphate, fluroroapatite, carboxyapatite, or mixtures thereof. The mass ratio of calcium carbonate to tricalcium phosphate and/or apatitic calcium phosphate may be in the range from 0.01:1 to 59:1, preferably from 0.1:1 to 44:1, more preferably from 0.2:1 to 29:1, even more preferably from 0.3:1 to 15:1, and most preferably from 0.5:1 to 5:1.

The surface-reacted calcium carbonate can be kept in suspension, optionally further stabilized by a dispersant. Conventional dispersants known to the skilled person can be used, for example, homopolymers or copolymers of polycarboxylic acid salts based on, for example, acrylic acid, methacrylic acid, maleic acid, fumaric acid or itaconic acid and acrylamide or mixtures thereof. Homopolymers or copolymers of acrylic acid are especially preferred. The weight average molecular weight M_{w} of such products is preferably in the range from 2 000 to 15 000 g/mol, with a weight average molecular weight M_{w} from 3 000 to 7 000 g/mol or 3 500 to 6 000 g/mol being especially preferred. A preferred dispersant is comprised of polyacrylic acids and/or carboxymethylcelluloses.

According to a preferred embodiment, the aqueous suspension described above is dried, thereby obtaining the solid (i.e. dry or containing as little water that it is not in a fluid form) surface-reacted natural or precipitated calcium carbonate in the form of granules or a powder.

The surface-reacted calcium carbonate may have different particle shapes, such as e.g., the shape of roses, golf balls and/or brains.

According to one embodiment, the surface-reacted calcium carbonate has an intra-particle intruded specific pore volume in the range from 0.1 to 2.3 cm³/g, more preferably from 0.2 to 2.0 cm³/g, especially preferably from 0.4 to 1.8 cm³/g and most preferably from 0.6 to 1.6 cm³/g, calculated from mercury porosimetry measurement.

The intra-particle pore size of the surface-reacted calcium carbonate preferably is in a range of from 0.004 to 1.0 µm, more preferably in a range of between 0.005 to 0.8 µm, especially preferably from 0.006 to 0.6 µm and most preferably of 0.007 to 0.4 µm, e.g., 0.004 to 0.40 µm determined by mercury porosimetry measurement.

According to another preferred embodiment the first filler comprises, preferably consist of hydromagnesite.

Hydromagnesite or basic magnesium carbonate, which is the standard industrial name for hydromagnesite, is a naturally occurring mineral which is found in magnesium rich minerals such as serpentine and altered magnesium rich igneous rocks, but also as an alteration product of brucite in periclase marbles. Hydromagnesite is described as having the following formula Mg₅(CO₃)₄(OH)₂ · 4H₂O.

It should be appreciated that hydromagnesite is a very specific mineral form of magnesium carbonate and occurs naturally as small needle-like crystals or crusts of acicular or bladed crystals. In addition thereto, it should be noted that hydromagnesite is a distinct and unique form of magnesium carbonate and is chemically, physically and structurally different from other forms of magnesium carbonate. Hydromagnesite can readily be distinguished from other magnesium carbonates by x-ray diffraction analysis, thermogravimetric analysis or elemental analysis. Unless specifically described as hydromagnesite, all other forms of magnesium carbonates (e.g. artinite (Mg₂(CO₃)(OH)₂ · 3H₂O), dypingite (Mg₅(CO₃)₄(OH)₂ · 5H₂O), giorgiosite (Mg₅(CO₃)₄(OH)₂ · 5H₂O), pokrovskite (Mg₂(CO₃)(OH)₂ · 0.5H₂O), magnesite (MgCO₃), barringtonite (MgCO₃ · 2H₂O), lansfordite (MgCO₃ · 5H₂O) and nesquehonite (MgCO₃ · 3H₂O)) are not hydromagnesite within the meaning of the present invention and do not correspond chemically to the formula described above.

Besides the natural hydromagnesite, synthetic hydromagnesites (or precipitated magnesium carbonates) can be prepared. For instance, US 1,361,324, US 935,418, GB 548,197 and GB 544,907 generally describe the formation of aqueous solutions of magnesium bicarbonate (typically described as "Mg(HCO₃)₂"), which is then transformed by the action of a base, e.g., magnesium hydroxide, to form hydromagnesite. Other processes described in the art suggest to prepare compositions containing both, hydromagnesite and magnesium hydroxide, wherein magnesium hydroxide is mixed with water to form a suspension which is further contacted with carbon dioxide and an aqueous basic solution to form the corresponding mixture; cf. for example US 5,979,461.

It is appreciated that the hydromagnesite can be one or a mixture of different kinds of hydromagnesite(s). In one embodiment of the present invention, the hydromagnesite comprises, preferably consists of, one kind of hydromagnesite. Alternatively, the hydromagnesite comprises, preferably consists of, two or more kinds of hydromagnesites. For example, the hydromagnesite comprises, preferably consists of, two or three kinds of hydromagnesites. Preferably, the hydromagnesite comprises, more preferably consists of, one kind of hydromagnesite.

According to a preferred embodiment of the present invention the first filler is a surface-reacted calcium carbonate.

The first filler is present in the filler composition in an amount of 0.5 to 100 parts by weight, preferably 1.0 to 90.0 parts by weight, more preferably 4.0 to 80.0 parts by weight, even more preferably 6.0 to 60.0 parts by weight and most preferably 10.0 to 40.0 parts by weight, based on the total dry weight of the filler composition.

The first filler is preferably in the form of a particulate material, and may have a particle size distribution as conventionally employed for the material(s) involved in the type of product to be produced. According to one embodiment of the present invention, the first filler has a median particle size *d*₅₀ from 1.0 µm to 75 µm, preferably from 2.0 µm to 40 µm, more preferably from 3.0 µm to 25 µm, even more preferably from 3.4 to 20 µm, and most preferably from 3.6 to 15 µm.

Additionally or alternatively, the first filler has a particle size *d₉₀* from 2.0 to 100 µm, preferably from 2.5 µm to 50 µm and most preferably from 5.0 µm to 25 µm. Additionally or alternatively, the first filler has a top cut particle size *d*₉₈ from 2 to 150 µm, preferably from 4 to 100 µm, more preferably from 4 to 80 µm, even more preferably from 5 to 60 µm, and most preferably from 7 to 30 µm.

Additionally or alternatively, the first filler has a specific surface area of from 20 to 200 m²/g, preferably from 20 to 150 m²/g, more preferably from 30 to 130 m²/g, and most preferably from 40 to 90 m²/g as measured by the BET nitrogen method.

Thus it is preferred that the first filler has
a median particle size *d*₅₀ from 1.0 µm to 75 µm, preferably from 2.0 µm to 40 µm, more preferably from 3.0 µm to 25 µm, even more preferably from 3.4 to 20 µm, and most preferably from 3.6 to 15 µm; and/or
a particle size *d₉₀* from 2.0 to 100 µm, preferably from 2.5 µm to 50 µm, most preferably from 5.0 µm to 25 µm, and/or
a specific surface area of from 20 to 200 m²/g, preferably from 20 to 150 m²/g, more preferably from 30 to 130 m²/g, and most preferably from 40 to 90 m²/g as measured by the BET nitrogen method.

For example, the first filler has
a median particle size *d*₅₀ from 1.0 µm to 75 µm, preferably from 2.0 µm to 40 µm, more preferably from 3.0 µm to 25 µm, even more preferably from 3.4 to 20 µm, and most preferably from 3.6 to 15 µm; or
a particle size *d₉₀* from 2.0 to 100 µm, preferably from 2.5 µm to 50 µm, most preferably from 5.0 µm to 25 µm, or
a specific surface area of from 20 to 200 m²/g, preferably from 20 to 150 m²/g, more preferably from 30 to 130 m²/g, and most preferably from 40 to 90 m²/g as measured by the BET nitrogen method.

Alternatively, the first filler has
a median particle size *d*₅₀ from 1.0 µm to 75 µm, preferably from 2.0 µm to 40 µm, more preferably from 3.0 µm to 25 µm, even more preferably from 3.4 to 20 µm, and most preferably from 3.6 to 15 µm; and
a particle size *d₉₀* from 2.0 to 100 µm, preferably from 2.5 µm to 50 µm, most preferably from 5.0 µm to 25 µm, and
a specific surface area of from 20 to 200 m²/g, preferably from 20 to 150 m²/g, more preferably from 30 to 130 m²/g, and most preferably from 40 to 90 m²/g as measured by the BET nitrogen method.

In one embodiment of the present invention, the first filler has a median particle size *d*₅₀ from 1.0 µm to 75 µm, preferably from 2.0 µm to 40 µm, more preferably from 3.0 µm to 25 µm, even more preferably from 3.4 to 20 µm, and most preferably from 3.6 to 15 µm. for example about 4 µm and has a specific surface area of from 20 to 200 m²/g, preferably from 20 to 150 m²/g, more preferably from 30 to 130 m²/g, and most preferably from 40 to 90 m²/g, for example about 80 m²/g as measured by the BET nitrogen method.

According to one embodiment of the present invention, the first filler is surface-treated with at least one surface treatment agent. Preferably the at least one surface treatment agent is selected from the group consisting of mono- or di-substituted succinic anhydride containing compounds, mono- or di-substituted succinic acid containing compounds, mono- or di-substituted succinic acid salts containing compounds; saturated or unsaturated fatty acids, salts of saturated or unsaturated fatty acids; unsaturated esters of phosphoric acid, salts of unsaturated phosphoric acid esters; mixtures thereof and reaction products thereof, and more preferably is selected from the group consisting of saturated or unsaturated fatty acids, salts of saturated or unsaturated fatty acids, mixtures thereof, and reaction products thereof.

For example, at least 1 %, preferably at least 10 %, or more preferably at least 30%, 50 %, 70 % and most preferably at least 90 % of the accessible surface area of the first filler is covered by a coating comprising the at least one surface treatment agent, preferably selected from the group consisting of mono- or di-substituted succinic anhydride containing compounds, mono- or di-substituted succinic acid containing compounds, mono- or di-substituted succinic acid salts containing compounds; saturated or unsaturated fatty acids, salts of saturated or unsaturated fatty acids; unsaturated esters of phosphoric acid, salts of unsaturated phosphoric acid esters; mixtures thereof and reaction products thereof.

According to another embodiment of the present invention the first filler is a blend of a surface-treated first filler with a non-surface treated first filler.

Possible surface treatment agents that may be used in the present invention are known to the skilled person and are commercially available. Furthermore, such possible surface treatment agent are described, for example in EP 2 722 368, EP 2 770 017, EP 3 176 204 and EP 3 339 355.

### • the second filler

As already set out above the second filler is selected from the group consisting of ground calcium carbonate, precipitated calcium carbonate and mixtures thereof.

The term "ground calcium carbonate" (GCC) or "ground natural calcium carbonate" (GNCC) as used herein refers to a particulate material obtained from mined natural calcium carbonate-containing minerals (e.g. chalk, limestone, marble or dolomite) which has been processed in a wet and/or dry comminution step, such as crushing and/or grinding, and optionally has been subjected to further steps such as screening and/or fractionation, for example, by a cyclone or a classifier.

According to a preferred embodiment of the present invention the second filler comprises, preferably consist of ground calcium carbonate (GCC). According to another preferred embodiment the ground calcium carbonate (GCC) is marble, limestone, dolomite and/or chalk.

It is appreciated that the ground calcium carbonate can be one or a mixture of different kinds of ground calcium carbonate(s). In one embodiment of the present invention, the ground calcium carbonate comprises, preferably consists of, one kind of ground calcium carbonate. Alternatively, the ground calcium carbonate comprises, preferably consists of, two or more kinds of ground calcium carbonates. For example, the ground calcium carbonate comprises, preferably consists of, two or three kinds of ground calcium carbonates. Preferably, the ground calcium carbonate comprises, more preferably consists of, one kind of ground calcium carbonate.

A "precipitated calcium carbonate" (PCC) in the meaning of the present invention is a synthesized material, obtained by precipitation following a reaction of carbon dioxide and calcium hydroxide (hydrated lime) in an aqueous environment. Alternatively, precipitated calcium carbonate can also be obtained by reacting calcium- and carbonate salts, for example calcium chloride and sodium carbonate, in an aqueous environment or by precipitation of calcium and carbonate ions, for example CaCl₂ and Na₂CO₃, out of solution. Further possible ways of producing PCC are the lime soda process, or the Solvay process in which PCC is a by-product of ammonia production.

According to a preferred embodiment of the present invention, the second filler comprises, preferably consists of precipitated calcium carbonate (PCC). According to another preferred embodiment the PCC is rhombohedral and/or scalenohedral and/or aragonitic and preferably, the precipitated calcium carbonate comprises aragonitic, vateritic or calcitic mineralogical crystal forms or mixtures thereof.

It is appreciated that the precipitated calcium carbonate can be one or a mixture of different kinds of precipitated calcium carbonate(s). In one embodiment of the present invention, the precipitated calcium carbonate comprises, preferably consists of, one kind of precipitated calcium carbonate. Alternatively, the precipitated calcium carbonate comprises, preferably consists of, two or more kinds of precipitated calcium carbonates. For example, the precipitated calcium carbonate comprises, preferably consists of, two or three kinds of precipitated calcium carbonates. Preferably, the precipitated calcium carbonate comprises, more preferably consists of, one kind of precipitated calcium carbonate.

In one preferred embodiment, the second filler is ground calcium carbonate.

The second filler is present in the filler composition in an amount of 0 to 99.5 parts by weight, preferably 10.0 to 99.0 parts by weight, more preferably 20.0 to 96.0 parts by weight, even more preferably 40.0 to 94.0 parts by weight and most preferably 60.0 to 90.0 parts by weight, based on the total dry weight of the filler composition.

The second filler is preferably in the form of a particulate material, and may have a particle size distribution as conventionally employed for the material(s) involved in the type of product to be produced. In general, it is preferred that the second filler has a median particle size *d*₅₀ value in the range from 0.1 to 50 µm, preferably from 0.5 µm to 25 µm, and most preferably from 0.7 µm to 7.5 µm.

Additionally or alternatively, the second filler has a particle size (*d*₉₀) of from 0.5 µm to 100 µm, preferably from 1.5 µm to 50 µm and most preferably from 2.5 µm to 25 µm.

Additionally or alternatively, the second filler has a top cut (*d*₉₈) of ≤ 100 µm. For example, the second filler has a top cut (*d*₉₈) of ≤ 50 µm and most preferably of ≤ 25 µm.

Additionally or alternatively the second filler has a BET specific surface area of from 0.1 to 100 m²/g as measured by the BET nitrogen method. For example, the second filler has a specific surface area (BET) of from 0.5 to 50 m²/g and most preferably of from 2.5 to 20 m²/g as measured by the BET nitrogen method.

Additionally or alternatively, the second filler has a residual total moisture content of from 0.01 to 2 wt.-%, preferably from 0.01 to 1 wt.-%, more preferably from 0.02 to 0.5 wt.-% and most preferably from 0.03 to 0.2 wt.-%, based on the total dry weight of the second filler.

Thus, it is preferred that the second filler has
a median particle size *d*₅₀ from 0.1 µm to 50 µm, preferably from 0.5 µm to 25 µm, and most preferably from 0.7 µm to 7.5 µm, and/or
a particle size *d₉₀* from 0.5 to 100 µm, preferably from 1.5 µm to 50 µm, most preferably from 2.5 µm to 25 µm, and/or
a specific surface area of from 0.1 to 100 m²/g, more preferably from 0.5 to 50 m²/g and most preferably from 2.5 to 20 m²/g as measured by the BET nitrogen method.

For example, the second filler has
a median particle size *d*₅₀ from 0.1 µm to 50 µm, preferably from 0.5 µm to 25 µm, and most preferably from 0.7 µm to 7.5 µm, or
a particle size *d₉₀* from 0.5 to 100 µm, preferably from 1.5 µm to 50 µm, most preferably from 2.5 µm to 25 µm, or
a specific surface area of from 0.1 to 100 m²/g, more preferably from 0.5 to 50 m²/g and most preferably from 2.5 to 20 m²/g as measured by the BET nitrogen method.

Alternatively, the second filler has
a median particle size *d*₅₀ from 0.1 µm to 50 µm, preferably from 0.5 µm to 25 µm, and most preferably from 0.7 µm to 7.5 µm, and
a particle size *d₉₀* from 0.5 to 100 µm, preferably from 1.5 µm to 50 µm, most preferably from 2.5 µm to 25 µm, and
a specific surface area of from 0.1 to 100 m²/g, more preferably from 0.5 to 50 m²/g and most preferably from 2.5 to 20 m²/g as measured by the BET nitrogen method.

In one embodiment of the present invention, the second filler has a median particle size diameter *d*₅₀ value from 0.1 µm to 50 µm, preferably from 0.5 µm to 25 µm, and most preferably from 0.7 µm to 7.5 µm, for example, about 0.9 µm or about 4 µm and has a specific surface area of from 0.1 to 100 m²/g, more preferably from 0.5 to 50 m²/g and most preferably from 2.5 to 20 m²/g, for example about 7.9 m²/g or 27 m²/g as measured by the BET nitrogen method.

According to a preferred embodiment of the present invention the second filler is ground calcium carbonate.

It is preferred that the second filler is a dry ground material, a material being wet ground and dried or a mixture of the foregoing materials. In general, the grinding step can be carried out with any conventional grinding device, for example, under conditions such that refinement predominantly results from impacts with a secondary body, i.e. in one or more of: a ball mill, a rod mill, a vibrating mill, a roll crusher, a centrifugal impact mill, a vertical bead mill an attrition mill, a pin mill, a hammer mill, a pulveriser, a shredder, a de-clumper, a knife cutter, or other such equipment known to the skilled man.

In case second filler is a wet ground calcium carbonate, the grinding step may be performed under conditions such that autogenous grinding takes place and/or by horizontal ball milling, and/or other such processes known to the skilled man. The wet processed ground calcium carbonate thus obtained may be washed and dewatered by well known processes, e.g. by flocculation, filtration or forced evaporation prior to drying. The subsequent step of drying may be carried out in a single step such as spray drying, or in at least two steps, e.g. by applying a first heating step to the calcium carbonate-containing filler material in order to reduce the associated moisture content to a level which is not greater than about 1 wt.-%, based on the total dry weight of the at least one calcium carbonate-containing filler material. The residual total moisture content of the filler can be measured by the Karl Fischer coulometric titration method, desorbing the moisture in an oven at 195°C and passing it continuously into the KF coulometer (Mettler Toledo coulometric KF Titrator C30, combined with Mettler oven DO 0337) using dry N₂ at 100 ml/min for 10 min. The residual total moisture content can be determined with a calibration curve and also a blind of 10 min gas flow without a sample can be taken into account. The residual total moisture content may be further reduced by applying a second heating step to the at least one calcium carbonate-containing filler material. In case said drying is carried out by more than one drying steps, the first step may be carried out by heating in a hot current of air, while the second and further drying steps are preferably carried out by an indirect heating in which the atmosphere in the corresponding vessel comprises a surface treatment agent. It is also common that the second filler material is subjected to a beneficiation step (such as a flotation, bleaching or magnetic separation step) to remove impurities.

In one embodiment of the present invention, the second filler comprises a dry ground calcium carbonate. In another preferred embodiment, the second filler is a material being wet ground in a horizontal ball mill, and subsequently dried by using the well-known process of spray drying.

For example, in case the second filler is a wet ground and spray dried calcium carbonate, the residual total moisture content of the second filler is preferably from 0.01 to 2 wt.-%, preferably from 0.01 to 1 wt.-%, more preferably from 0.02 to 0.5 wt.-% and most preferably from 0.03 to 0.2 wt.-%, based on the total dry weight of the second filler and/or the second filler has a median particle size diameter *d*₅₀ value from 0.1 µm to 50 µm, preferably from 0.5 µm to 25 µm and most preferably from 0.7 µm to 7.5 µm, for example, about 0.9 µm and has a specific surface area of from 0.1 to 100 m²/g, more preferably from 0.5 to 50 m²/g and most preferably from 2.5 to 20 m²/g as measured by the BET nitrogen method, for example, about 7.9 m²/g.

According to another preferred embodiment of the present invention, the second filler is precipitated calcium carbonate and preferably calcite and has a residual total moisture content of from 0.01 to 2 wt.-%, preferably from 0.01 to 1 wt.-%, more preferably from 0.02 to 0.5 wt.-% and most preferably from 0.03 to 0.2 wt.-%, based on the total dry weight of the second filler and/or the second filler is precipitated calcium carbonate and preferably calcite has a median particle size diameter *d*₅₀ value from 0.1 µm to 50 µm, preferably from 0.5 µm to 25 µm and most preferably from 0.7 µm to 7.5 µm, for example, about 4.0 µm and has a specific surface area of from 0.1 to 100 m²/g, more preferably from 0.5 to 50 m²/g as measured by the BET nitrogen method, for example, about 27 m²/g.

According to one embodiment of the present invention, the second filler is surface-treated with at least one surface treatment agent. Preferably the at least one surface treatment agent is selected from the group consisting of mono- or di-substituted succinic anhydride containing compounds, mono- or di-substituted succinic acid containing compounds, mono- or di-substituted succinic acid salts containing compounds; saturated or unsaturated fatty acids, salts of saturated or unsaturated fatty acids; unsaturated esters of phosphoric acid, salts of unsaturated phosphoric acid esters; mixtures thereof and reaction products thereof, and more preferably is selected from the group consisting of saturated or unsaturated fatty acids, salts of saturated or unsaturated fatty acids, mixtures thereof, and reaction products thereof.

For example, at least 1 %, preferably at least 10 %, or more preferably at least 30 %, 50 %, 70 % and most preferably at least 90 % of the accessible surface area of the second filler is covered by a coating comprising the at least one surface treatment agent, preferably selected from the group consisting of mono- or di-substituted succinic anhydride containing compounds, mono- or di-substituted succinic acid containing compounds, mono- or di-substituted succinic acid salts containing compounds; saturated or unsaturated fatty acids, salts of saturated or unsaturated fatty acids; unsaturated esters of phosphoric acid, salts of unsaturated phosphoric acid esters; mixtures thereof and reaction products thereof.

According to another embodiment of the present invention the second filler is a blend of a surface-treated second filler with a non-surface treated second filler.

Possible surface treatment agents that may be used in the present invention are known to the skilled person and are commercially available. Furthermore, such possible surface treatment agent are described, for example in EP 2 722 368, EP 2 770 017, EP 3 176 204 and EP 3 339 355.

### • the filler composition

The at least one filler composition is present in the PVC resin composition in an amount of 0.1 to 75.0 parts per hundred parts of the at least one PVC resin (phr). Preferably, the at least one filler composition is present in an amount of 1.0 to 60.0 phr, preferably 5.0 to 50 phr, more preferably 10 to 40 phr, even more preferably 15 to 35 phr, and most preferably of 25 phr.

The at least one filler composition consists of
i) 0.5 to 100 parts by weight based on the total dry weight of the filler composition of a first filler selected from the group consisting of surface-reacted calcium carbonate, hydromagnesite and mixtures thereof, and
ii) 0 to 99.5 parts by weight based on the total dry weight of the filler composition of a second filler selected from the group consisting of ground calcium carbonate, precipitated calcium carbonate and mixtures thereof,
with the provision that the sum of the first filler and the second filler is 100 parts by weight.

According to one embodiment of the present invention, the at least one filler composition consists only of a first filler selected from the group consisting of surface-reacted calcium carbonate, hydromagnesite and mixtures thereof and preferably surface-reacted calcium carbonate. In this case no second filler is present in the at least one filler composition.

According to another preferred embodiment of the present invention the filler composition consists of
i) 0.5 to 100 parts by weight based on the total dry weight of the filler composition of a first filler selected from the group consisting of surface-reacted calcium carbonate, hydromagnesite and mixtures thereof, and
ii) 0 to 99.5 parts by weight based on the total dry weight of the filler composition of a second filler selected from the group consisting of ground calcium carbonate, precipitated calcium carbonate and mixtures thereof,
with the provision that the sum of the first filler and the second filler is 100 parts by weight, wherein the first filler is a surface-reacted calcium carbonate and/or the second filler is a ground calcium carbonate. According to a preferred embodiment the first filler is a surface-reacted calcium carbonate and the second filler is a ground calcium carbonate.

According to another embodiment of the present invention, the first filler is present in the filler composition in an amount of 1.0 to 90.0 parts by weight, preferably 4.0 to 80.0 parts by weight, more preferably 6.0 to 60.0 parts by weight and most preferably 10.0 to 40.0 parts by weight, based on the total dry weight of the filler composition and the second filler is present in the filler composition in an amount of 10.0 to 99.0 parts by weight, preferably 20.0 to 96.0 parts by weight, more preferably 40.0 to 94.0 parts by weight and most preferably 60.0 to 90.0 parts by weight, based on the total dry weight of the filler composition, with the provision that the sum of the first filler and the second filler is 100 parts by weight.

### The at least one blowing agent

The PVC resin composition of the present invention further comprises at least one blowing agent in an amount of from 0.10 to 10 phr.

The term "at least one" blowing agent in the meaning of the present invention means that the blowing agent comprises, preferably consists of, one or more blowing agent(s).

In one embodiment of the present invention, the at least one blowing agent in the PVC resin composition comprises, preferably consists of, one blowing agent. Alternatively, the at least one blowing agent comprises, preferably consists of, two or more blowing agent. For example, the at least one blowing agent comprises, preferably consists of, two or three blowing agents.

Preferably, the at least one blowing agent in the PVC resin composition comprises, more preferably consists of, a mixture of two different blowing agents.

The blowing agent(s) may be of the type well known to the skilled person and widely used in foaming of polymers.

Typical chemical blowing agents (e.g., materials that undergo decomposition reactions producing gases) that may be used in the present invention include exothermic and endothermic chemical blowing agents. Examples of exothermic chemical blowing agents suitable for use in the present invention include, but are not limited to, azodicarbonamide, diazoaminobenzene, azo-bis-isobutyro-nitrile p,p-oxybis(benzene) sulfonyl hydrazide, p-toluene sulfonyl hydrazide, p-toluene sulfonyl semicarbazide, dinitrosopentamethyltetramine, and 5-phenyltetrazole. Non-limiting examples of suitable endothermic chemical blowing agents include sodium bicarbonate also known as sodium hydrogencarbonate and sodium borohydride.

Some commercially available foaming agents combine a mixture of endo- and exothermic foaming agents. Examples of such combined foaming agents include the GMA series from Kibbe Chem Engineered Blowing Agents and Colorants, Inc and the Forticell series from Americhem, Inc.

Other suitable chemical blowing agents include compounds that undergo a change of state at the desired foaming temperature, for example, undergo phase change from liquid to gas during the foaming process. Such agents are, for example, chlorofluorocarbons (CFC), HFCF, hydrocarbons, halogenated alkanes, low boiling alcohols such as methanol, ketones such as acetone, or low-boiling esters (methyl formate).

Typical physical blowing agents are, for example, supercritical gases such as supercritical CO₂, N₂, or any other inert gas that may be pressurized into a liquid may alternatively be added as blowing agents through a conduit and into the extruder. In addition, air may be utilized as a blowing agent.

According to one embodiment of the present invention, the at least one blowing agent is a physical blowing agent, an endothermic or exothermic chemical blowing agent or a mixture thereof.

Preferably, the blowing agent is an endothermic or exothermic chemical blowing agent. In one preferred embodiment, the blowing agent is selected such that it decomposes at a temperature of at least 180 °C, more preferably of at least 190 °C and most preferably of at least 200 °C. For example, the blowing agent is selected such that is has a decomposition temperature of between 200 °C and 240 °C. The blowing agent may further comprise one or more additives to reduce its decomposition temperature.

In one preferred embodiment, the blowing agent is azodicarbonamide. For the purpose of the present invention, any azodicarbonamide that decomposes at a temperature higher than a specific temperature and generates gas is suitable for use in the inventive resin composition. In one preferred embodiment, the azodicarbonamide is selected such that it decomposes at a temperature of at least 180 °C, more preferably of at least 190 °C and most preferably of at least 200 °C. For example, the azodicarbonamide is selected such that is has a decomposition temperature of between 200 °C and 210 °C. Such azodicarbonamides are known to the skilled person and are commercially available, for example from Lanxess under the trade name Genitron EPE.

In another preferred embodiment, the blowing agent is sodium hydrogencarbonate. For the purpose of the present invention, any sodium hydrogencarbonate that decomposes at a temperature higher than a specific temperature and generates gas is suitable for use in the inventive resin composition. In one preferred embodiment, the sodium hydrogencarbonate is selected such that it decomposes at a temperature of at least 50 °C. Such sodium hydrogencarbonates are known to the skilled person and are commercially available, for example from Lanxess under the trade name Genitron TP BCH 51051.

According to a preferred embodiment of the present invention, the at least one blowing agent is a mixture of an endothermic blowing agent and an exothermic blowing agent, and most preferably a mixture of azodicarbonamide and sodium hydrogencarbonate.

In another preferred embodiment, the composition of the present invention comprises the azodicarbonamide and/or the sodium hydrogencarbonate in powder form.

The blowing agent is used in an amount sufficient to produce the desired degree of foaming, namely in an amount of between 0.10 phr and 10 phr. Preferably, the resin composition of the present invention comprises the at least one blowing agent in an amount of between 0.3 phr and 8.0 phr and most preferably in an amount of between 0.5 phr and 6.0 phr. Alternatively, the resin composition of the present invention comprises the at least one blowing agent in an amount of below 2.0 phr, preferably in an amount of 0.5 phr to 1.0 phr. For example, the blowing agent is present in the resin composition in an amount of 0.7 phr.

Alternatively, the resin composition of the present invention comprises the blowing agent in an amount of less than 5 wt.-%, more preferably from 0.1 wt.-% to 4 wt.-%, even more preferably from 0.2 to 2 wt.-%, and most preferably from 0.3 wt.-% to 1 wt.-%, based on the total weight of the resin composition. In one preferred embodiment the resin composition of the present invention comprises the blowing agent in an amount of between 0.3 wt.-% and 0.8 wt.-%, based on the total weight of the resin composition. For example, the resin composition of the present invention comprises the at least one blowing agent in an amount of about 0.50 wt.-%, based on the total weight of the resin composition.

If the at least one blowing agent comprises two or more blowing agents, the resin composition of the present invention comprises each of the blowing agents in the same amount or in different amount, and preferably in the same amounts.

### Further preferred embodiments of the PVC resin composition

The PVC resin composition of the present invention may comprise further additives generally used for preparing foamed rigid polymer products. Such additives may be added for the purpose of e.g. increasing impact resistance, melt elasticity, stability and resistance to oxidation of the polymer product. Preferably, the PVC resin composition further comprises at least one component selected from the group comprising nucleating agents, stabilizers, impact modifiers, lubricant additives, processing aids and mixtures thereof.

In one preferred embodiment, the resin composition of the present invention further comprises at least one processing aid. Processing aids are employed in the resin composition to improve melt elasticity and strength and to prevent the collapse of the cellular structure during processing. In one especially preferred embodiment, the processing aid is selected from low molecular weight acrylic polymers and/or high or ultra-high molecular weight acrylic polymers. The acrylic polymers are preferably acrylic copolymers.

If the processing aid is a low molecular weight acrylic polymer, the acrylic polymer is preferably an acrylic copolymer having a specific gravity of between 1.05 g/cm³ and 1.15 g/cm³, and more preferably of between 1.07 g/cm³ and 1.12 g/cm³, e.g. of about 1.10 g/cm³. Additionally or alternatively, the low molecular weight acrylic polymer has a bulk density of at least 0.35 g/cm³, more preferably of at least 0.38 g/cm³, and most preferably of at least 0.40 g/cm³, e.g. of about 0.40 g/cm³. "Bulk density" in the meaning of the present invention is a property of powders, granules and other "divided" solids and is defined as the mass of many particles of the material divided by the total volume they occupy. The total volume includes particle volume, inter-particle void volume and internal pore volume. Additionally or alternatively, the low molecular weight acrylic polymer has a specific viscosity of between 0.05 Pa·s and 0.30 Pa·s, more preferably of between 0.08 Pa·s and 0.25 Pa·s and most preferably of between 0.10 Pa·s and 0.20 Pa·s, e.g. of between 0.13 Pa·s and 0.19 Pa·s. Additionally or alternatively, not more than 2 wt.-%, more preferably not more than 1.5 wt.-% and most preferably not more than 1 wt.-% of the low molecular weight acrylic polymer particles pass through a 16 mesh sieve.

In case the processing aid is a high or ultra-high molecular weight acrylic polymer, the acrylic polymer is preferably an acrylic copolymer having a specific gravity of between 1.07 g/cm³ and 1.20 g/cm³ and more preferably of between 1.10 g/cm³ and 1.15 g/cm³, e.g. about 1.11 g/cm³. Additionally or alternatively, the high or ultra-high molecular weight acrylic polymer has a bulk density of at least 0.30 g/cm³, more preferably of at least 0.40 g/cm³, and most preferably of at least 0.45 g/cm³, e.g. of about 0.50 g/cm³. Additionally or alternatively, the high or ultra-high molecular weight acrylic polymer has a specific viscosity of between 1.5 Pa·s and 6.5 Pa·s, more preferably of between 2 Pa·s and 6 Pa·s and most preferably of between 2.5 Pa·s and 5.5 Pa·s, e.g. of between 3 Pa·s and 5 Pa·s. Additionally or alternatively, not more than 5 wt.-%, more preferably not more than 4 wt.-% and most preferably not more than 3 wt.-% of the high or ultra-high molecular weight acrylic polymer particles retain on a 40 mesh sieve.

In one embodiment, the at least one processing aid comprises a mixture of processing aids. In a further preferred embodiment, the processing aid comprises a mixture of a low molecular weight acrylic polymer and a high molecular weight acrylic polymer.

If the processing aid comprises a mixture of a low molecular weight acrylic polymer and a high molecular weight acrylic polymer, the mole ratio of low molecular weight acrylic polymer and high molecular weight acrylic polymer is from 5:1 to 1:5, more preferably from 4:1 to 1:4, even more preferably from 3:1 to 1:3 and most preferably from 2:1 to 1:2. In one especially preferred embodiment of the present invention, the mole ratio of low molecular weight acrylic polymer and high molecular weight acrylic polymer is about 1:1.

According to a preferred embodiment of the present invention, the at least one processing aid is a high or ultra-high molecular weight acrylic polymer.

The at least one processing aid is preferably provided in the form of a powder.

Processing aids suitable in the inventive composition are available from a wide variety of commercial sources. Useful processing aids include the processing aids available from Kaneka Texas Corporation, Pasadena, USA as Kane Ace® PA101 Processing aid or Kane Ace® PA650 Processing aid or from Arkema, under the trade name Plastistrength 566.

The resin composition of the present invention comprises the processing aid preferably in an amount of at least 0.5 phr, more preferably from 1 phr to 10 phr and most preferably from 2 phr to 9 phr. For example, the resin composition comprises the processing aid in an amount of 7 phr.

Alternatively, the resin composition comprises the processing aid in an amount of at least 1 wt.-%, more preferably from 1.5 wt.-% to 10 wt.-% and most preferably from 2.5 wt.-% to 7.0 wt.-%, based on the total weight of the resin composition. For example, the resin composition comprises the processing aid in an amount from 4.5 wt.-% to 5.5 wt.-%, based on the total weight of the resin composition.

In one embodiment, typical acrylic impact modifiers which are used to improve the impact strength of the rigid polymer foam may be added to the resin composition according to the particular circumstance. In this regard, the resin composition comprises the acrylic impact modifier in an amount of at least 1 phr, more preferably from 2 phr to 6 phr and most preferably from 3 phr to 5 phr. For example, the resin composition comprises the acrylic impact modifier in an amount of 4 phr.

Alternatively, the resin composition comprises the acrylic impact modifier in an amount of at least 1.5 wt.-%, more preferably from 1.5 wt.-% to 5 wt.-% and most preferably from 2 wt.-% to 4 wt.-%, based on the total weight of the resin composition. In one preferred embodiment, the resin composition comprises the acrylic impact modifier in an amount of between 2.5 wt.-% and 3.5 wt.-%, based on the total weight of the resin composition. For example, the resin composition comprises the acrylic impact modifier in an amount from 3 wt.-% to 3.25 wt.-%, based on the total weight of the resin composition.

Acrylic impact modifiers suitable in the inventive composition are available from a wide variety of commercial sources. Useful acrylic impact modifiers include the acrylic impact modifier available from Dow Chemical Company, Midland, USA as Paraloid™ KM 366.

In one preferred embodiment, a stabilizer is added to the resin composition. The stabilizers are typically selected from Pb stabilizers, Sn containing stabilizers, Ca-Zn containing stabilizers, organic based stabilizer OBS®, Ca-organic bases stabilizers, Ba-Zn containing stabilizers, or combinations thereof. In one especially preferred embodiment, a Ca-Zn-containing stabilizer is added to the resin composition. In this regard, the resin composition comprises the Ca-Zn-containing stabilizer preferably in an amount of at least 1 phr, more preferably from 1 phr to about 6 phr, even more preferably from 2 phr to 5 phr, and most preferably from 3 phr to 4 phr. For example, the resin composition comprises the Ca-Zn-containing stabilizer in an amount of about 3.5 phr.

Alternatively, the resin composition comprises the Ca-Zn-containing stabilizer in an amount of at least 2 wt.-%, more preferably from 2 wt.-% to 5 wt.-% and most preferably from 2.3 wt.-% to 4 wt.-%, based on the total weight of the resin composition. In one preferred embodiment, the resin composition comprises the Ca-Zn-containing stabilizer in an amount of between 2.4 wt.-% and 3 wt.-%, based on the total weight of the resin composition. For example, the resin composition comprises the Ca-Zn-containing stabilizer in an amount of about 2.5 wt.-%, based on the total weight of the resin composition.

Ca-Zn-containing stabilizers suitable in the inventive composition are available from a wide variety of commercial sources. Useful Ca-Zn-containing stabilizers include the Ca-Zn-containing stabilizer available from Reagens, Loxstedt or Baerlocher GmbH, Unterschleissheim, Germany as Stabilox CZ 2913 GN, or from Baeropan as R9347 PS/7.

Alternatively, the stabilizer may be selected from a wide variety of organotin stabilizers. For example, methyl tin, reverse ester tins and tin mercaptides may be added to the inventive composition. Such organotin stabilizers comprise several classes of compounds. Tin mercaptide stabilizers comprise blends of dialkyltin bis(iso-thioglycolates) with monoalkyltin tris(iso-thioglycolates). Reverse ester tin stabilizers comprise blends of dialkyltin bis(2-mercaptoethyl oleates). Other organotin stabilizers which may be added to the inventive composition comprise dialkytin carboxylateesters, of which the most common are dialkytin maleate esters such as dialkyltin maleate octoate.

If an organotin stabilizer is added to the inventive resin composition, said resin composition comprises the organotin stabilizer preferably in an amount of at least 0.1 phr, more preferably from 0.1 phr to about 1.75 phr and most preferably from 0.25 phr to 1.5 phr. For example, the resin composition comprises the organotin stabilizer in an amount of between 0.25 phr and 1.25 phr.

Alternatively, the resin composition comprises the organotin stabilizer in an amount of at least 0.1 wt.-%, more preferably from 0.1 wt.-% to 2.5 wt.-% and most preferably from 0.1 wt.-% to 2 wt.-%, based on the total weight of the resin composition. In one preferred embodiment, the resin composition comprises the organotin stabilizer in an amount of between 0.1 wt.-% and 2 wt.-%, based on the total weight of the resin composition. For example, the resin composition comprises the organotin stabilizer in an amount from 0.1 wt.-% to 1.75 wt.-%, based on the total weight of the resin composition.

In one embodiment, a nucleating agent is added to the resin composition. The nucleating agent is preferably selected such that the formation of bubbles for the foaming is promoted. In one preferred embodiment, the nucleating agent does not support crystallization. The bubble-promoting nucleating agents can optionally be included in the resin composition. Such bubble-promoting nucleating agents can be selected from the variety of inert solids disclosed in the prior art to be useful as such nucleating agents, including mixtures of citric acid and sodium bicarbonate or other alkali metal bicarbonates, talc, silicon oxide, diatomaceous earth, kaolin, polycarboxylic acids and their salts, and titanium dioxide. Other inert solids disclosed in the art for these purposes may also be found suitable.

In one embodiment, the resin composition comprises the nucleating agent preferably in an amount of at least 0.1 phr, more preferably from 2 phr to about 6 phr and most preferably from 3 phr to 5 phr. For example, the resin composition comprises the nucleating in an amount of between 4 phr and 4.5 phr.

Alternatively, the resin composition comprises the nucleating agent in an amount of at least 0.2 wt.-%, more preferably from 2 wt.-% to 5 wt.-% and most preferably from 2.5 wt.-% to 5 wt.-%, based on the total weight of the resin composition. In one preferred embodiment, the resin composition comprises the nucleating agent in an amount of between 2.5 wt.-% and 4 wt.-%, based on the total weight of the resin composition. For example, the resin composition comprises the nucleating agent in an amount from 3 wt.-% to 3.5 wt.-%, based on the total weight of the resin composition.

According to a preferred embodiment of the present invention no nucleating agent is present in the resin composition.

Additionally or alternatively, further additives such as lubricants, calcium stearate and/ or titanium dioxide may be added, if necessary. Such further additives are preferably present in the resin composition of at least 0.01 phr, more preferably from 0.01 phr to 9 phr and most preferably from 0.02 phr to 7.0 phr. For example, the resin composition comprises these further additives in an amount of about 0.05 phr. In one especially preferred embodiment, the further additives is a lubricant.

Lubricants, calcium stearates and/or titanium dioxides suitable in the inventive composition are available from a wide variety of commercial sources. Useful lubricants include the lubricant available from Reagens Deutschland GmbH as Realube 3010 or from Baerlocher under the trade name Baerolube PA Spezial. Useful calcium stearates include the calcium stearate available from Reagens Deutschland GmbH as Realube AIS. Useful titanium dioxides include the titanium dioxide available from Dupont, Wilmington, USA as Dupont R960. Known Suppliers for such compounds are Arkema, Lanxess, Baerlocher, Chemson, Ika, Reagens, Akdeniz Kimya, Kronos, DuPont, Huntsman etc. Known lubricants that may be used in the present invention are C14-C18 fatty alcohols, C14-C18 dicarboxylic acid esters, C14-C18 fatty acid glycerol esters, C14-C18 metal soaps, C16-C18 fatty acid glycerol esters, C14-C18 fatty acid esters, C16-C18 fatty acid esters, C6-C18 ester waxes, C14-C18 ester waxes, C14-C18 fatty acid amides, C18 metal soaps, C14-C18 hydroxy fatty acids, >C14-C18 fatty acids, >C20 paraffin waxes or ≈C100 polyethylene waxes.

In one preferred embodiment, the resin composition comprises a mixture of at least one PVC resin, wherein the at least one PVC resin is a polyvinyl chloride homopolymer, at least one filler composition according to the invention, at least one blowing agent according to the present invention, a Ca-Zn-containing stabilizer, a lubricant, and a processing aid, wherein the processing aid is a high or ultra-high molecular weight acrylic polymer.

In one especially preferred embodiment, the resin composition comprises a mixture of at least one PVC resin in an amount of 100 phr, wherein the at least one PVC resin is a polyvinyl chloride homopolymer, at least one filler composition according to the invention, at least one blowing agent according to the invention, a Ca-Zn-containing stabilizer in an amount of 3.5 phr, a lubricant in an amount of 0.05 phr, and a processing aid in an amount of 7 phr, wherein the processing aid is a high or ultra-high molecular weight acrylic polymer.

In another preferred embodiment the first filler and/or the second filler is/are surface-treated with at least one surface treatment agent or is/are a blend of a surface-treated filler and a non-surface treated filler. For example, only the first filler is surface-treated with at least one surface treatment agent and the second filler is non-surface treated or the first filler is non-surface treated and the second filler is surface-treated with at least one surface-treatment agent. Alternatively both fillers are surface-treated with at least one surface treatment agent or both fillers are non-surface treated. The first filler and/or the second filler can be a blend of a surface-treated filler with a non-surface treated filler, for example, the first filler can be a blend of a surface-treated first filler with a non-surface treated first filler and/or the second filler can be a blend of a surface-treated second filler with a non-surface treated second filler. Preferably the at least one surface treatment agent is selected from the group consisting of mono- or di-substituted succinic anhydride containing compounds, mono- or di-substituted succinic acid containing compounds, mono- or di-substituted succinic acid salts containing compounds; saturated or unsaturated fatty acids, salts of saturated or unsaturated fatty acids; unsaturated esters of phosphoric acid, salts of unsaturated phosphoric acid esters; mixtures thereof and reaction products thereof, and more preferably is selected from the group consisting of saturated or unsaturated fatty acids, salts of saturated or unsaturated fatty acids, mixtures thereof, and reaction products thereof.

For example, at least 1 %, preferably at least 10 %, or more preferably at least 30 %, 50 %, 70 % and most preferably at least 90 % of the accessible surface area of the first filler and/or the second filler is covered by a coating comprising the at least one surface treatment agent, preferably selected from the group consisting of mono- or di-substituted succinic anhydride containing compounds, mono- or di-substituted succinic acid containing compounds, mono- or di-substituted succinic acid salts containing compounds; saturated or unsaturated fatty acids, salts of saturated or unsaturated fatty acids; unsaturated esters of phosphoric acid, salts of unsaturated phosphoric acid esters; mixtures thereof and reaction products thereof.

The term "accessible surface area" in the meaning of the present invention refers to the surface of the first filler and/or second filler particle that is accessible or exposed to the at least one surface treatment agent applied by coating techniques known to the skilled person such as hot fluidised bed spray coating, hot-wet coating, solvent-assisted or self-assembly coating and the like and thereby forming a monolayer of at least one surface treatment agent on the surface of the first filler and/or second filler particle. In this regard, it should be noted that the amount of the at least one surface treatment agent required for full saturation of the accessible surface area is defined as a monolayer concentration. Higher concentrations thus can be chosen as well thereby forming bilayered or multi-layered structures on the surface of the first filler and/or second filler particle. Such monolayer concentrations can be readily calculated by the skilled person, based on the publication of Papirer, Schultz and Turchi (Eur. Polym. J., Vol. 20, No. 12, pp. 1155-1158, 1984).

Possible surface treatment agents that may be used in the present invention are known to the skilled person and are commercially available. Furthermore, such possible surface treatment agent are described, for example in EP 2 722 368, EP 2 770 017, EP 3 176 204 and EP 3 339 355.

The term "reaction products thereof' in the meaning of the present invention refers to the products typically obtained by contacting a first and/or second filler with the at least one surface treatment agent. Said reaction products are preferably formed between the applied surface treatment agent and molecules located at the surface of the first and/or second filler.

The first and/or second filler can be surface-treated with the at least one surface treatment agent by any conventional surface treatment method known to the skilled person.

However, the average temperature at which the first and/or second filler is treated with the at least one surface treatment may, for example, range from 60 °C to 200 °C, e.g. from 80 °C to 150 °C with a residence time of the first and/or second filler in the vessel being greater than about 10 seconds.

Surface-treated first fillers have
a median particle size *d*₅₀ from 1.0 µm to 75 µm, preferably from 2.0 µm to 40 µm, more preferably from 3.0 µm to 25 µm, even more preferably from 3.4 to 20 µm, and most preferably from 3.6 to 15 µm; and/or
a particle size *d₉₀* from 2.0 to 100 µm, preferably from 2.5 µm to 50 µm, most preferably from 5.0 µm to 25 µm, and/or
a specific surface area of from 20 to 200 m²/g, preferably from 20 to 150 m²/g, more preferably from 30 to 130 m²/g, and most preferably from 40 to 90 m²/g as measured by the BET nitrogen method.

Surface-treated second fillers have
a median particle size *d*₅₀ from 0.1 µm to 50 µm, preferably from 0.5 µm to 25 µm, and most preferably from 0.7 µm to 7.5 µm, and/or
a particle size *d₉₀* from 0.5 to 100 µm, preferably from 1.5 µm to 50 µm, most preferably from 2.5 µm to 25 µm, and/or
a specific surface area of from 0.1 to 100 m²/g, more preferably from 0.5 to 50 m²/g and most preferably from 2.5 to 20 m²/g as measured by the BET nitrogen method.

### Method for preparing a foamed polymer product

In another aspect, a method for preparing a foamed polymer product is provided, comprising the following steps: providing a PVC resin composition according to the present invention and subjecting the PVC resin composition to conditions under which said PVC resin composition is converted into a foamed polymer product.

Appropriate process conditions for preparing foamed polymer products are commonly known to the skilled person and/or can be established by routine modifications based on common general knowledge.

For example, the components described above can be blended by conventional high shears mixing techniques commonly known to the skilled person.

After the components of the PVC resin composition have been blended by conventional high shear mixing techniques, the PVC resin composition of the present invention can be converted into a rigid polymer foam by conventional processing techniques such as blow molding, injection molding, compression molding or extrusion molding commonly known to the skilled person.

In one preferred embodiment, the resin composition of the present invention is processed in a conventional extruder which has been fitted with the desired die and which extruder has been heated to the desired temperature. The extruder is operated at a screw speed, temperatures and residence times such that rigid polymer foam products are formed which are commercially acceptable.

For example, the resin may be processed in a Göttfert/Krauss-Maffei twin screw extruder with a counter-rotating screw configuration (Göttfert, Buchen, Germany/Krauss-Maffei, München, Germany). The temperature profile for the heating zones 1 to 6 of the Haake extruder is preferably adjusted to temperatures of between 140 °C and 200 °C each from hopper to die.

In one preferred embodiment, the temperature profile for the heating zones 1 to 10 of the Göttfert/Krauss-Maffei extruder is adjusted such that heating zones 1 to 10 have temperatures of between 160 °C and 190 °C. In one especially preferred embodiment, the temperature profile for the heating zones 1 to 6 of the Göttfert/Krauss-Maffei extruder is preferably adjusted to temperatures of 170 °C for the barrel temperatures. Adapter and die are set to 180 °C.

In one preferred embodiment, the screw speed of the Göttfert/Krauss-Maffei extruder is adjusted in the range of 10 rpm to 100 rpm, more preferably in the range of 10 rpm to 60 rpm and most preferably in the range of 20 rpm to 50 rpm, e.g. 40 rpm.

According to a preferred embodiment the subjecting of the PVC resin composition to conditions under which said PVC resin composition is converted into a foamed polymer product comprises the steps of:
b1) feeding the PVC resin composition of step a) into an extruder,
b2) exposing the PVC resin composition of step b1) to mechanical force, elevated temperature and/or increased pressure to obtain an at least partially molten PVC resin mixture,
b3) passing the at least partially molten PVC resin mixture of step b2) through an extrusion die to form an extrudate, and
b4) allowing the extrudate of step b3) to form a foamed polymer product.

### Product, Article and Use

According to another aspect of the present invention, a foamed polymer product is prepared from a PVC resin composition according to the present invention.

More precisely, a foamed polymer product is prepared from a PVC resin composition comprising
a) at least one PVC resin,
b) at least one filler composition in an amount of 0.1 to 75.0 parts per hundred parts of the at least one PVC resin (phr), wherein the at least one filler composition consists of
   i) 0.5 to 100 parts by weight based on the total dry weight of the filler composition of a first filler selected from the group consisting of surface-reacted calcium carbonate, hydromagnesite and mixtures thereof, and
   ii) 0 to 99.5 parts by weight based on the total dry weight of the filler composition of a second filler selected from the group consisting of ground calcium carbonate, precipitated calcium carbonate and mixtures thereof,
   with the provision that the sum of the first filler and the second filler is 100 parts by weight and
c) at least one blowing agent in an amount of from 0.10 to 10 phr.

The advantage of the PVC resin composition of the present invention is that the foamed polymer product obtained from the PVC composition has a density and part weight being the same or lower than the density and part weight of a corresponding foamed polymer product obtained from the same composition but without providing at least one filler composition in an amount of 0.1 to 75.0 parts per hundred parts of the at least one PVC resin (phr), wherein the at least one filler composition consists of i) 0.5 to 100 parts by weight based on the total dry weight of the filler composition of a first filler selected from the group consisting of surface-reacted calcium carbonate, hydromagnesite and mixtures thereof, and ii) 0 to 99.5 parts by weight based on the total dry weight of the filler composition of a second filler selected from the group consisting of ground calcium carbonate, precipitated calcium carbonate and mixtures thereof, with the provision that the sum of the first filler and the second filler is 100 parts by weight and at least one blowing agent in an amount of from 0.10 to 10 phr.

According to one embodiment of the present invention a foamed foamed polymer product is prepared from a PVC resin composition comprising
a) at least one PVC resin,
b) at least one filler composition in an amount of 0.1 to 75.0 parts per hundred parts of the at least one PVC resin (phr), wherein the at least one filler composition consists of
   i) 0.5 to 100 parts by weight based on the total dry weight of the filler composition of a first filler selected from the group consisting of surface-reacted calcium carbonate, hydromagnesite and mixtures thereof, and
   ii) 0 to 99.5 parts by weight based on the total dry weight of the filler composition of a second filler selected from the group consisting of ground calcium carbonate, precipitated calcium carbonate and mixtures thereof,
   with the provision that the sum of the first filler and the second filler is 100 parts by weight and
c) at least one blowing agent in an amount of from 0.10 to 10 phr, wherein the foamed polymer product has a density and part weight being the same or lower than the density and part weight of a corresponding foamed polymer product obtained from the same composition but without providing at least one filler composition in an amount of 0.1 to 75.0 parts per hundred parts of the at least one PVC resin (phr).

More precisely, the inventors found that the density and part weight of a foamed polymer product can be maintained or effectively be reduced by preparing the polymer foam from a resin composition containing a combination of a defined filler composition in an amount of 0.1 to 75.0 phr of the at least one PVC resin and 0.10 to 10 phr of the at least one blowing agent of the present invention. Therefore, the amount of filler may be increased without compromising the density and part weight in the final polymer foam product obtained. The foams prepared from the resin composition of the present invention exhibit excellent properties, e.g. the obtained foamed polymer product has a density in the range of 0.40 to 1.3 g/cm³, preferably in the range of 0.42 to 1.1 g/cm³, more preferably in the range of 0.47 to 1.0 g/cm³, even more preferably in the range of 0.50 to 0.90g/cm³, and most preferably in the range of 0.55 to 0.80 g/cm³.

According to a preferred embodiment of the present invention, the foamed polymer product of the present invention is an open cell PVC foam, a closed cell PVC foam, a foamed rigid PVC sheet or a foamed rigid PVC board.

According to one embodiment of the present invention a foamed foamed polymer product is prepared from a PVC resin composition comprising
a) at least one PVC resin,
b) at least one filler composition in an amount of 0.1 to 75.0 parts per hundred parts of the at least one PVC resin (phr), wherein the at least one filler composition consists of
   i) 0.5 to 100 parts by weight based on the total dry weight of the filler composition of a first filler selected from the group consisting of surface-reacted calcium carbonate, hydromagnesite and mixtures thereof, and
   ii) 0 to 99.5 parts by weight based on the total dry weight of the filler composition of a second filler selected from the group consisting of ground calcium carbonate, precipitated calcium carbonate and mixtures thereof,
   with the provision that the sum of the first filler and the second filler is 100 parts by weight and
c) at least one blowing agent in an amount of from 0.10 to 10 phr, wherein the foamed polymer product has a density in the range of 0.40 to 1.3 g/cm³, preferably in the range of 0.42 to 1.1 g/cm³, more preferably in the range of 0.47 to 1.0 g/cm³, even more preferably in the range of 0.50 to 0.90g/cm³, and most preferably in the range of 0.55 to 0.80 g/cm³ and/or
wherein the foamed polymer product is an open cell PVC foam, a closed cell PVC foam, a foamed rigid PVC sheet or a foamed rigid PVC board.

In a further preferred embodiment, the obtained polymer product prepared from the resin composition of the present invention is a foamed rigid PVC polymer product. It is preferred that the obtained rigid polymer product prepared from the resin composition of the present invention is a foamed rigid PVC polymer product.

In one preferred embodiment, the obtained foamed polymer product prepared from the resin composition of the present invention shows a homogeneous cell size distribution.

According to another aspect of the present invention, an article is provided comprising the foamed polymer product according to the present invention, wherein the article is a construction material, a window profile, a duct, a pipe, a wall cladding, an insulation material, a sealant, a sign, a printing media, an exhibition board, an automotive part, a marine part or an aircraft part. According to a preferred embodiment of the present invention, the article is a pipe, a window profile, or construction material.

According to another aspect, the present invention provides the use of a filler selected from the group consisting of surface-reacted calcium carbonate, hydromagnesite, and mixtures thereof, in a foamable PVC resin composition for reducing the density of the obtained foamed PVC product in comparison to a foamed PVC product comprising a filler selected from the group consisting of ground calcium carbonate, precipitated calcium carbonate, and mixtures thereof.

According to another aspect, the present invention provides the use of a filler selected from the group consisting of surface-reacted calcium carbonate, hydromagnesite, and mixtures thereof, in a foamable PVC resin composition for reducing the amount of blowing agent in the foamable PVC resin composition in comparison to a foamable PVC resin composition comprising a filler selected from the group consisting of ground calcium carbonate, precipitated calcium carbonate, and mixtures thereof.

The following examples will additionally illustrate the present invention, but are not meant to restrict the invention to the exemplified embodiments. The examples below show the effectiveness of the inventive at least one filler composition in combination with the at least one blowing agent in the at least one PVC resin for maintaining or reducing the density of a foamed PVC polymer product according to the present invention.

### Examples

### A. Measuring methods

If not otherwise indicated, the parameters mentioned in the present invention are measured according to the measuring methods described below.

### Density

Density measurements are made with Mettler Toledo's Density Kit by using the buoyancy technique. For the determination, 5 samples are cut out of the obtained PVC foams each sample having dimensions of 20x40x10 mm³ and are weighted in air (M). Subsequently, the buoyancy (P) in distilled water is measured and the density is calculated with the formula (M/(M-P))^{∗}density of water.

### Foam bubble quality evaluation

Foamed samples are cut using a "Typ M50 Mikroschnittgerät" to have a clear surface appearance. Following a picture is taken using a microscope with camera and ring light in flat angle position to allow uniform light conditions for the bubble surrounding and enough contrast between the bubbles and the matrix. With a suitable picture interpretation software, the bubbles are counted, and the circumference of each bubble is calculated. Smaller bubble circumferences and higher bubble amounts for the same picture diameters at same enlargement show better nucleation of the foamed polymer.

### Weight median particle diameter d₅₀ Value

Throughout the present invention, *d*₅₀ is the weight median particle diameter by weight, for all particulate materials other than surface-reacted calcium carbonate i.e. representing the particle size so that 50 wt.-% of the particles are coarser or finer.

The weight median particle diameter was measured according to the sedimentation method. The sedimentation method is an analysis of sedimentation behaviour in a gravimetric field. The measurement is made with a Sedigraph™ 5100 of Micromeritics Instrument Corporation. The method and the instrument are known to the skilled person and are commonly used to determine grain size of fillers and pigments. The measurement is carried out in an aqueous solution of 0.1 wt.-% Na₄P₂O₇. The samples were dispersed using a high speed stirrer and supersonic.

### Volume median particle diameter d₅₀ Value

Throughout the present invention, *d*₅₀ is the volume median particle diameter by weight for the surface-reacted calcium carbonare, i.e. representing the particle size so that 50 wt.-% of the particles are coarser or finer.

The volume-based median particle size *d*₅₀(vol) and top cut *d*₉₈(vol) are evaluated using a Malvern Mastersizer 2000 Laser Diffraction System (Malvern Instruments Plc., Great Britain). The raw data obtained by the measurement is analyzed using the Mie theory, with a particle refractive index of 1.57 and an absorption index of 0.005//using the Fraunhofer theory. The methods and instruments are known to the skilled person and are commonly used to determine particle size distributions.

### Specific surface area (BET)

The specific surface area was measured using nitrogen and the BET method according to ISO 9277:2010.

### Moisture content

Moisture content of the inorganic filler is determined by thermogravimetric analysis (TGA). TGA analytical methods provide information regarding losses of mass with great accuracy, and is common knowledge; it is, for example, described in "Principles of Instrumental analysis", fifth edition, Skoog, Holler, Nieman, 1998 (first edition 1992) in Chapter 31 pages 798 to 800, and in many other commonly known reference works. In the present invention, thermogravimetric analysis (TGA) is performed using a Mettler Toledo TGA 851 based on a sample of 500 +/- 50 mg and scanning temperatures from 25 °C to 350 °C at a rate of 20 °C/minute under an air flow of 70 ml/min.

Alternatively, the moisture content of the inorganic filler is determined by the oven method.

### K-Value of PVC

A measure of the molecular weight of PVC based on measurements of viscosity of a PVC solution. It ranges usually between 35 and 80. Low K-values imply low molecular weight (which is easy to process but has inferior properties) and high K-values imply high molecular weight, (which is difficult to process, but has outstanding properties). In general, K-values for a particular PVC resin are provided by the resin producer either on the packaging or the accompanying technical data sheet.

### B. Preparation and testing of samples

The components and the respective amounts of the resin compositions prepared in Comparative Examples C1, C2, D1 and D2 and inventive Examples E1 to E3, F1 and F2 are outlined in the following Tables 1 and 2:

**Table 1:**

| Example | C1 | C2 | E1 | E2 | E3 |
|---|---|---|---|---|---|
| PVC K-value 60 | 100 (phr) | 100 (phr) | 100 (phr) | 100 (phr) | 100 (phr) |
| Ca-Zn containing stabilizer | 3.5 (phr) | 3.5 (phr) | 3.5 (phr) | 3.5 (phr) | 3.5 (phr) |
| Exothermic Foaming agent | 0.35 (phr) | 0.35 (phr) | 0.35 (phr) | 0.35 (phr) | 0.35 (phr) |
| Endothermic Foaming agent | 0.35 (phr) | 0.35 (phr) | 0.35 (phr) | 0.35 (phr) | 0.35 (phr) |
| Lubricant | 0.05 (phr) | 0.05 (phr) | 0.05 (phr) | 0.05 (phr) | 0.05 (phr) |
| processing aid | 7 (phr) | 7 (phr) | 7 (phr) | 7 (phr) | 7 (phr) |
| Ground natural CaCO₃ | 25 (phr) | 0 (phr) | 0 (phr) | 22.5 (phr) | 0 (phr) |
| Precipitated CaCO₃ | 0 (phr) | 0 (phr) | 0 (phr) | 0 (phr) | 22.5 (phr) |
| Modified CaCO₃ | 0 (phr) | 0 (phr) | 2.5 (phr) | 2.5 (phr) | 2.5 (phr) |

**Table 2:**

| Example | D1 | D2 | F1 | F2 |
|---|---|---|---|---|
| PVC K-value 60 | 100 (phr) | 100 (phr) | 100 (phr) | 100 (phr) |
| Ca-Zn containing stabilizer | 3.5 (phr) | 3.5 (phr) | 3.5 (phr) | 3.5 (phr) |
| Exothermic Foaming agent | 0.35 (phr) | 0.35 (phr) | 0.35 (phr) | 0.35 (phr) |
| Endothermic Foaming agent | 0.35 (phr) | 0.35 (phr) | 0.35 (phr) | 0.35 (phr) |
| Lubricant | 0.05 (phr) | 0.05 (phr) | 0.05 (phr) | 0.05 (phr) |
| processing aid | 7 (phr) | 7 (phr) | 7 (phr) | 7 (phr) |
| Ground natural CaCO₃ | 25 (phr) | 0 (phr) | 22.5 (phr) | 0 (phr) |
| Precipitated CaCO₃ | 0 (phr) | 25 (phr) | 0 (phr) | 22.5 (phr) |
| Hydromagnesite | 0 (phr) | 0 (phr) | 2.5 (phr) | 2.5 (phr) |

In particular, the following commercially available components were used for preparing the compositions:
Polyvinyl chloride polymer having a K-value of 60 (commercially available under the trade name Vynova S6030 PVC; Vynova Wilhelmshaven)
Ca-Zn-containing stabilizer (commercially available under the trade name Baeropan R9347 PS/7, from Baerlocher, Unterschleissheim).

Exothermic foaming agent Azodicarbonamide (commercially available under the trade Genitron EPE, from Lanxess, Leverkusen .

Endothermic foaming agent NaHCO₃ (commercially available under the trade Genitron TP BCH 51051, from Lanxess, Leverkusen).

Lubricant additive (oxidized PE wax, commercially available under the trade name Baerolube PA Spezial, from Baerlocher, Unterschleissheim).

Processing aid (acrylic flow modifier, commercially available under the trade name Plastistrength 566 from Arkema, Pierre-Bénite).

The Ground natural calcium carbonate (GCC) is of natural origin and was prepared according to grinding methods known to the skilled person and as described in US 5,533,678 or US 5,873,935 with the use of dispersing agents during the wet grinding process and treated with 1wt% of an industrial fatty acid mixture of C₁₈/C₁₆ in amounts of 40wt%/60wt%. Such industrial fatty acid mixtures can vary in their C₁₈/C₁₆ amount from about 30 wt% - 70 wt% / 70 wt% - 30 wt%, as well as in their carbon chain length being from C₁₄ to C₂₀. The obtained GCC has the following characteristics:
*d₅₀* = approximately 0.94 µm.
BET surface area (before surface treatment) = approximately 7.9 m²/g.

The precipitated calcium carbonate (PCC) is commercially available from Solvay (S.A.) under the trade name Winnofil S Properties and has the following characteristics:
*d₅₀* = approximately 0.1µm.
BET surface area = approximately 27 m²/g.

The surface-reacted calcium carbonate was produced according to the defined process of the present invention and has the following characteristics:
*d₅₀* = approximately 4.0 µm.
BET surface area = approximately 80 m²/g.

The hydromagnesite was produced according to the defined process of the present invention and has the following characteristics:
*d₅₀* = approximately 1.0 µm.
BET surface area = approximately 80 m²/g.

The above examples (table 1 and table 2) are prepared by previously mixing the above components using a hot/cold mixing process known to the skilled person, and extruding the mixture on a Göttfert extrusion line equipped with a Krauss-Maffei plastifiction unit, L/D 32, with counter rotating parallel twin screws, the screws having a diameter of 30 mm each.

Properties of the Comparative Examples C1/D1 and C2/D2 and the Inventive Examples E1 to E3, F1 and F2 are shown in the following Tables 3 and 4:

**Table 3:**

| Example | C1 | C2 | E1 | E2 | E3 |
|---|---|---|---|---|---|
| Density [g/cm³] | 0.78 | 0.78 | 0.78 | 0.74 | 0.74 |
| Bubble count | 1315 | 1261 | 1349 | 1374 | 1729 |
| Median Bubble Circumference [µm] | 349 | 331 | 330 | 339 | 307 |
| Melt temperature | 193.3 | 192.4 | 193.7 | 194.3 | 194.3 |
| Torque [Nm] | 455 | 416 | 435 | 509 | 468 |

**Table 4:**

| Example | D1 | D2 | F1 | F2 |
|---|---|---|---|---|
| Density [g/cm³] | 0.76 | 0.75 | 0.67 | 0.67 |
| Bubble count | 1453 | 1712 | 1200 | 1391 |
| Median Bubble Circumference [µm] | 310 | 280 | 329 | 297 |
| Melt temperature | 191.5 | 193.8 | 193.1 | 194.7 |
| Torque [Nm] | 452 | 441 | 493 | 515 |

Material densities of the unfoamed material can be calculated based on the density and ratio of the single components. Since all mineral materials have the same density and the formulation remains largely unchanged the "start density" or unfoamed density is given as follows in Tables 5 and 6:

**Table 5:**

| Example | C1 | C2 | E1 | E2 | E3 |
|---|---|---|---|---|---|
| Density unfoamed [g/cm³] | 1.48 | 1.35 | 1.36 | 1.48 | 1.48 |
| Density [g/cm³] | 0.78 | 0.78 | 0.78 | 0.74 | 0.74 |

**Table 6:**

| Example | D1 | D2 | F1 | F2 |
|---|---|---|---|---|
| Density unfoamed [g/cm³] | 1.48 | 1.48 | 1.48 | 1.48 |
| Density [g/cm³] | 0.76 | 0.75 | 0.67 | 0.67 |

E1 containing only the surface-reacted calcium carbonate of the present invention provides the same density in foamed condition despite having a 0.75 % higher start density due to mineral addition compared to control sample C2. In combination as described in formulation E2 with 25 phr filler composition according to the present invention comprising GCC as second filler and surface-reacted calcium carbonate as first filler the density reduction is 5 % despite having a 9.6 % higher start density. The use of PCC as second filler described in formulation E3 has a similar effect.

Consequently, a composition for preparing foamed PVC polymer products comprising the inventive filler composition has been shown to be highly efficient in the maintaining or reduction of foam density. To some extent also a lower median bubble circumference can be provided at the same time.

## Claims

1. A PVC resin composition for preparing foamed polymer products, said composition comprising
a) at least one PVC resin,
b) at least one filler composition in an amount of 0.1 to 75.0 parts per hundred parts of the at least one PVC resin (phr), wherein the at least one filler composition consists of
i) 0.5 to 100 parts by weight based on the total dry weight of the filler composition of a first filler selected from the group consisting of surface-reacted calcium carbonate, hydromagnesite and mixtures thereof, and
ii) 0 to 99.5 parts by weight based on the total dry weight of the filler composition of a second filler selected from the group consisting of ground calcium carbonate, precipitated calcium carbonate and mixtures thereof,
with the provision that the sum of the first filler and the second filler is 100 parts by weight and
c) at least one blowing agent in an amount of from 0.10 to 10 phr.

2. The PVC resin composition according to claim 1, wherein the first filler is present in the filler composition in an amount of 1.0 to 90.0 parts by weight, preferably 4.0 to 80.0 parts by weight, more preferably 6.0 to 60.0 parts by weight and most preferably 10.0 to 40.0 parts by weight, based on the total dry weight of the filler composition and the second filler is present in the filler composition in an amount of 10.0 to 99.0 parts by weight, preferably 20.0 to 96.0 parts by weight, more preferably 40.0 to 94.0 parts by weight and most preferably 60.0 to 90.0 parts by weight, based on the total dry weight of the filler composition.

3. The PVC resin composition according to claim 1 or 2, wherein the at least one filler composition is present in an amount of 1.0 to 60.0 phr, preferably 5.0 to 50 phr, more preferably 10 to 40 phr, even more preferably 15 to 35 phr, and most preferably of 25 phr.

4. The PVC resin composition according to any of the preceding claims, wherein the at least one PVC resin has a K-value of between 50 to 70, preferably of between 54 to 68.

5. The PVC resin composition according to any one of the preceding claims, wherein the first filler is a surface-reacted calcium carbonate and/or the second filler is a ground calcium carbonate.

6. The PVC resin composition according to any one of the preceding claims, wherein the first filler has a median particle size *d*₅₀ from 1.0 µm to 75 µm, preferably from 2.0 µm to 40 µm, more preferably from 3.0 µm to 25 µm, even more preferably from 3.4 to 20 µm, and most preferably from 3.6 to 15 µm;
and/or a particle size *d₉₀* from 2.0 to 100 µm, preferably from 2.5 µm to 50 µm, most preferably from 5.0 µm to 25 µm,
and/or a specific surface area of from 20 to 200 m²/g, preferably from 20 to 150 m²/g, more preferably from 30 to 130 m²/g, and most preferably from 40 to 90 m²/g as measured by the BET nitrogen method.

7. The PVC resin composition according to any one of the preceding claims, wherein the second filler has a median particle size *d*₅₀ from 0.1 µm to 50 µm, preferably from 0.5 µm to 25 µm, and most preferably from 0.7 µm to 7.5 µm,
and/or a particle size *d₉₀* from 0.5 to 100 µm, preferably from 1.5 µm to 50 µm, most preferably from 2.5 µm to 25 µm,
and/or a specific surface area of from 0.1 to 100 m²/g, more preferably from 0.5 to 50 m²/g and most preferably from 2.5 to 20 m²/g as measured by the BET nitrogen method.

8. The PVC resin composition according to any one of the preceding claims, wherein the first filler and/or the second filler is/are surface-treated with at least one surface treatment agent or is/are a blend of a surface-treated filler and a non-surface treated filler, preferably the at least one surface treatment agent is selected from the group consisting of mono- or di-substituted succinic anhydride containing compounds, mono- or di-substituted succinic acid containing compounds, mono- or di-substituted succinic acid salts containing compounds; saturated or unsaturated fatty acids, salts of saturated or unsaturated fatty acids; unsaturated esters of phosphoric acid, salts of unsaturated phosphoric acid esters; mixtures thereof and reaction products thereof, and more preferably is selected from the group consisting of saturated or unsaturated fatty acids, salts of saturated or unsaturated fatty acids, mixtures thereof, and reaction products thereof.

9. The PVC resin composition according to any one of the preceding claims, wherein the at least one blowing agent is present in an amount of between 0.3 phr and 8.0 phr, and most preferably in an amount of between 0.5 and 6.0 phr.

10. The PVC resin composition according to any one of the preceding claims, wherein the at least one blowing agent is a physical blowing agent, an endothermic or exothermic chemical blowing agent or a mixture thereof, preferably the at least one blowing agent is a mixture of an endothermic blowing agent and an exothermic blowing agent, and most preferably a mixture of azodicarbonamide and sodium bicarbonate.

11. The PVC resin composition according to any one of the preceding claims, wherein the PVC resin composition further comprises at least one component selected from the group comprising nucleating agents, stabilizers, impact modifiers, lubricant additives, processing aids and mixtures thereof.

12. A method for preparing a foamed polymer product comprising the steps of:
a) providing a PVC resin composition according to any one of claims 1 to 11, and
b) subjecting the PVC resin composition of step a) to conditions under which said PVC resin composition is converted into a foamed polymer product.

13. The method according to claim 12, wherein step b) comprises the steps of:
b1) feeding the PVC resin composition of step a) into an extruder,
b2) exposing the PVC resin composition of step b1) to mechanical force, elevated temperature and/or increased pressure to obtain an at least partially molten PVC resin mixture,
b3) passing the at least partially molten PVC resin mixture of step b2) through an extrusion die to form an extrudate, and
b4) allowing the extrudate of step b3) to form a foamed polymer product.

14. A foamed polymer product prepared from a PVC resin composition according to claims 1 to 11.

15. The foamed polymer product according to claim 14, wherein the foamed polymer product has a density in the range of 0.40 to 1.3 g/cm³, preferably in the range of 0.42 to 1.1 g/cm³, more preferably in the range of 0.47 to 1.0 g/cm³, even more preferably in the range of 0.50 to 0.90 g/cm³, and most preferably in the range of 0.55 to 0.80 g/cm³.

16. The foamed polymer product according to claim 14 or 15, wherein the foamed polymer product is an open cell PVC foam, a closed cell PVC foam, a foamed rigid PVC sheet or a foamed rigid PVC board.

17. An article comprising the foamed polymer product according to any one of claims 14 to 16, wherein the article is a construction material, a window profile, a duct, a pipe, a wall cladding, an insulation material, a sealant, a sign, a printing media, an exhibition board, an automotive part, a marine part or an aircraft part.

18. Use of a filler selected from the group consisting of surface-reacted calcium carbonate, hydromagnesite, and mixtures thereof, in a foamable PVC resin composition for reducing the density of the obtained foamed PVC product in comparison to a foamed PVC product comprising a filler selected from the group consisting of ground calcium carbonate, precipitated calcium carbonate, and mixtures thereof.
